# EUROPEAN PATENT APPLICATION

(11) **EP 2 853 580 A1**
(43) Date of publication of application: **01.04.2015**
(21) Application number: 13793594.6
(22) Date of filing: 12.04.2013
(51) Int. Cl.: C09K 19/42, C09K 19/12, C09K 19/14, C09K 19/16, C09K 19/20, C09K 19/30, C09K 19/32, C09K 19/34, G02F 1/13

(54) **LIQUID CRYSTAL COMPOSITION AND LIQUID CRYSTAL DISPLAY ELEMENT**

(30) Priority: 23.05.2012 JP 2012117832
(71) Applicant: JNC Corporation, Chiyoda-ku Tokyo 100-8105 (JP); JNC Petrochemical Corporation, Tokyo 100-0004 (JP)
(72) Inventor: YANAI Takayoshi, Ichihara-shi Chiba 290-8551 (JP); HATTORI Norikatsu, Ichihara-shi Chiba 290-8551 (JP); SAITO Masayuki, Ichihara-shi Chiba 290-8551 (JP)
(74) Representative: Thurston, Joanna
(86) International application number: PCT/JP2013/061004
(87) International publication number: WO 2013/175892

(57) **Abstract**

To provide a liquid crystal composition having at least one or at least two suitable balance in characteristics such as a high maximum temperature of a nematic phase, a low minimum temperature of the nematic phase, a small viscosity, a suitable optical anisotropy, a large dielectric anisotropy, a large specific resistance, a high stability to ultraviolet light and a high stability to heat, and to provide an AM device having a short response time, suitable pretilt and so forth.

The liquid crystal composition has a negative dielectric anisotropy, and 4 .2 GPa · s/N or less as a ratio of rotational viscosity to an elastic constant, and contains a specific compound having a large negative dielectric anisotropy as a first component and a specific compound having a polymerizable group as a second component, and may contain a specific compound having a small viscosity or a large maximum temperature as a third component and a specific compound having a large negative dielectric anisotropy as a fourth component, and a liquid crystal display device includes the composition.

## Description

### Technical Field

The invention relates to a liquid crystal composition containing a polymerizable compound that is polymerized, for example, by light or heat. The invention also relates to a liquid crystal display device in which the liquid crystal composition is sealed between substrates, and the polymerizable compound contained in the liquid crystal composition is polymerized while adjusting a voltage to be applied to a liquid crystal layer to immobilize alignment of liquid crystals.

As the technical field, the invention relates to a liquid crystal composition mainly suitable for use in an active matrix (AM) device and so forth, and an AM device and so forth including the composition.

In particular, the invention relates to a liquid crystal composition having a negative dielectric anisotropy, and a device and so forth that contain the composition and have an in-plane switching (IPS) mode, a vertical alignment (VA) mode or a polymer sustained alignment (PSA) mode. The VA mode includes a multi-domain vertical alignment (MVA) mode and a patterned vertical alignment (PVA) mode.

### Background Art

In a liquid crystal display device, a classification based on an operating mode for liquid crystals includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode and a polymer sustained alignment (PSA) mode. A classification based on a driving mode in the device includes a passive matrix (PM) and an active matrix (AM). The PM is classified into static, multiplex and so forth, and the AM is classified into a thin film transistor (TFT), a metal insulator metal (MIM) and so forth. The TFT is further classified into amorphous silicon and polycrystal silicon. The latter is classified into a high temperature type and a low temperature type according to a production process. A classification based on a light source includes a reflective type utilizing natural light, a transmissive type utilizing backlight and a transflective type utilizing both the natural light and the backlight.

The devices include a liquid crystal composition having suitable characteristics. The liquid crystal composition has a nematic phase. General characteristics of the composition should be improved in order to obtain an AM device having good general characteristics. Table 1 below summarizes a relationship of the general characteristics between two aspects. The general characteristics of the composition will be further described based on a commercially available AM device. A temperature range of the nematic phase relates to a temperature range in which the device can be used. A preferred maximum temperature of the nematic phase is about 70°C or higher and a preferred minimum temperature of the nematic phase is about 0°C or lower. Viscosity of the composition relates to a response time in the device. A short response time is preferred for displaying moving images on the device. Accordingly, a small viscosity in the composition is preferred. A small viscosity at a low temperature is further preferred. An elastic constant of the composition relates to contrast in the device. A large elastic constant in the composition is further preferred for increasing the contrast in the device.

**Table 1. General Characteristics of Composition and AM Device**

| No. | General Characteristics of Composition | General Characteristics of AM Device |
|---|---|---|
| 1 | Wide temperature range of a nematic phase | Wide usable temperature range |
| 2 | Small viscosity ¹⁾ | Short response time |
| 3 | Suitable optical anisotropy | Large contrast ratio |
| 4 | Large positive or negative dielectric anisotropy | Low threshold voltage and small electric power consumption Large contrast ratio |
| 5 | Large specific resistance | Large voltage holding ratio and large contrast ratio |
| 6 | High stability to ultraviolet light and heat | Long service life |
| 7 | Large elastic constant | Large contrast ratio and short response time |

| | | |
|---|---|---|
| 1) A liquid crystal composition can be injected into a liquid crystal cell in a shorter period of time. | | |

An optical anisotropy of the composition relates to a contrast ratio in the device. A product (Δn × d) of the optical anisotropy (Δn) of the composition and a cell gap (d) in the device is designed so as to maximize the contrast ratio. A suitable value of the product depends on a type of the operating mode. In a device having the VA mode or the PSA mode, a suitable value is in the range of about 0.30 micrometer to about 0.40 micrometer, and in a device having the IPS mode in the range of about 0.20 micrometer to about 0.30 micrometer. In the above case, a composition having a large optical anisotropy is preferred for a device having a small cell gap. A large absolute value of a dielectric anisotropy in the composition contributes to a low threshold voltage, a small electric power consumption and a large contrast ratio in the device. Accordingly, the large absolute value of dielectric anisotropy is preferred. A large specific resistance in the composition contributes to a large voltage holding ratio, and contributes to a large contrast ratio in the device. Accordingly, a composition having a large specific resistance at room temperature and also at a high temperature in an initial stage is preferred. A composition having a large specific resistance at room temperature and also at a high temperature even after the device has been used for a long period of time is preferred. Stability of the composition to ultraviolet light and heat relates to a service life of the liquid crystal display device. In the case where the stability is high, the device has a long service life. Such characteristics are preferred for an AM device for use in a liquid crystal projector, a liquid crystal television and so forth. A large elastic constant in the composition contributes to a short response time and a large contrast ratio in the device. Accordingly, the large elastic constant is preferred. A small ratio of the viscosity to the elastic constant in the composition contributes to a short response time in the device. Accordingly, the small ratio of the viscosity to the elastic constant is preferred.

A composition having a positive dielectric anisotropy is used for an AM device having the TN mode. On the other hand, a composition having a negative dielectric anisotropy is used for an AM device having the VA mode. A composition having a positive or negative dielectric anisotropy is used for an AM device having the IPS mode and the FFS mode. A composition having a positive or negative dielectric anisotropy is used for an AM device having the PSA mode. Examples of the liquid crystal composition having the negative dielectric anisotropy are disclosed in Patent literature No. 1 to Patent literature No. 5 as described below and so forth.

Patent literature No. 1: WO 2010/084823 A.
Patent literature No. 2: JP 2004-131704 A.
Patent literature No. 3: JP 2010-537010 A.
Patent literature No. 4: JP 2009-102639 A.
Patent literature No. 5: JP 2009-132718 A.

A desirable AM device has characteristics such as a wide temperature range in which a device can be used, a short response time, a large contrast ratio, a low threshold voltage, a large voltage holding ratio and a long service life. A shorter response time even by one millisecond is desirable. Thus, desirable characteristics of the composition include a high maximum temperature of a nematic phase, a low minimum temperature of the nematic phase, a small viscosity, a suitable optical anisotropy, a large negative dielectric anisotropy, a large specific resistance, a high stability to ultraviolet light, a high stability to heat, a large elastic constant and a small ratio of viscosity to an elastic constant.

### Summary of Invention

### Technical Problem

One of the aims of the invention is to provide a liquid crystal composition satisfying at least one of characteristics such as a high maximum temperature of a nematic phase, a low minimum temperature of the nematic phase, a small viscosity, a suitable optical anisotropy, a large negative dielectric anisotropy, a low threshold voltage, a large specific resistance, a high stability to ultraviolet light, a high stability to heat, a large elastic constant and a small ratio of viscosity to an elastic constant. Another aim is to provide a liquid crystal composition having a suitable balance regarding at least two of the characteristics. A further aim is to provide a liquid crystal display device including such a composition. An additional aim is to provide a composition having a suitable optical anisotropy, a large negative dielectric anisotropy, a low threshold voltage, a high stability to ultraviolet light, a large elastic constant and so forth, and is to provide an AM device having characteristics such as a short response time, a large voltage holding ratio, a large contrast ratio and a long service life.

### Solution to Problem

A liquid crystal composition that has a negative dielectric anisotropy, and 4 .2 GPa · s/N or less as a ratio of rotational viscosity (γ1) to an elastic constant (K33), and contains at least one compound selected from the group of compounds represented by formula (1) as a first component, and at least one compound selected from the group of compounds represented by formula (2) as a second component, and a liquid crystal display device: 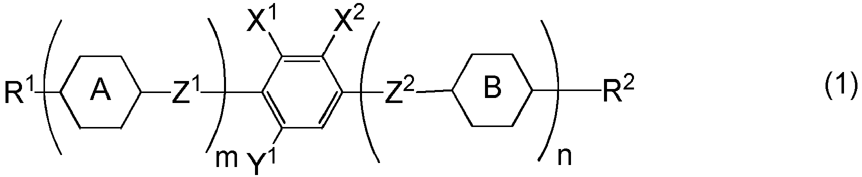 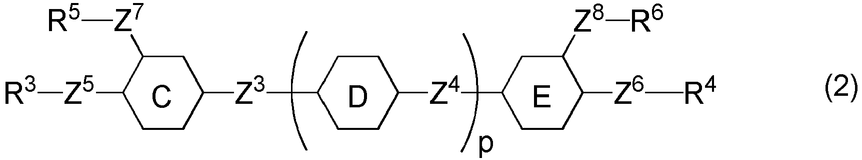 wherein, R¹ is alkenyl having 2 to 12 carbons; R² is alkyl having 1 to 12 carbons, alkoxy having 1 to 12 carbons or alkenyl having 2 to 12 carbons; R³, R⁴, R⁵ and R⁶ are independently hydrogen, alkyl having 1 to 12 carbons, alkoxy having 1 to 12 carbons, alkenyl having 2 to 12 carbons, or alkenyl having 2 to 12 carbons in which at least one of hydrogen is replaced by fluorine, or acryloyloxy, methacryloyloxy, vinyloxy, propenyloxy, oxirane, oxetane or vinylcarbonyl, and at least one of R³, R⁴, R⁵ and R⁶ is acryloyloxy, methacryloyloxy, vinyloxy, propenyloxy, oxirane, oxetane or vinylcarbonyl; Z¹, Z² and Z⁴ are independently a single bond, ethylene, methyleneoxy or carbonyloxy; Z³ is a single bond, ethylene, methyleneoxy, carbonyloxy, -CO-CR⁷=CR⁸-, -CR⁷=CR⁸-CO-, -CR⁷=CR⁸-, -C(=CR⁷R⁸)- or -C(=R⁹)-; R⁷ and R⁸ are independently hydrogen, halogen, alkyl having 1 to 10 carbons, or alkyl having 1 to 10 carbons in which at least one of hydrogen is replaced by fluorine; R⁹ is a group selected from the group of groups represented by formula (R-1); 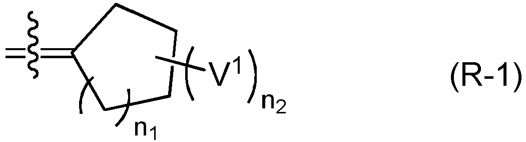 wherein, in formula (R-1), V¹ is independently halogen, alkyl having 1 to 6 carbons, or alkyl having 1 to 6 carbons in which at least one of hydrogen is replaced by fluorine; n₁ is an integer from 1 to 8; n₂ is an integer from 0 to 4;
Z⁵, Z⁶, Z⁷ and Z⁸ are independently a single bond or alkylene having 1 to 12 carbons, and at least one of hydrogen of the alkylene may be replaced by halogen or -C≡N, and at least one of -CH₂- may be replaced by -O-, -S-, -NH-, -CO-, -CO-O-, -O-CO-, -O-CO-O-, -CH=CH-or -C≡C-; ring A and ring B are independently 1,4-cyclohexylene, 1,4-phenylene in which at least one of hydrogen may be replaced by fluorine or chlorine, or tetrahydropyran-2,5-diyl; ring C and ring E are independently 1,4-cyclohexylene, 1,4-phenylene or 2, 6-naphthalene, and ring C and ring E when R⁵ and R⁶ are hydrogen and Z⁷ and Z⁸ are a single bond may be 2-fluoro-1,4-phenylene, 3-fluoro-1,4-phenylene, 2,3-difluoro-1,4-phenylene, 2-methyl-1,4-phenylene, 3-methyl-1,4-phenylene, 2-trifluoromethyl-1,4-phenylene or 3-trifluoromethyl-1,4-phenylene; ring D is 1,4-cyclohexylene, 1,4-phenylene, 2,6-naphthalene, 2-fluoro-1,4-phenylene, 3-fluoro-1,4-phenylene, 2,3-difluoro-1,4-phenylene, 3,6-difluoro-1,4-phenylene, 2-methyl-1,4-phenylene, 3-methyl-1,4-phenylene, 2-trifluoromethyl-1,4-phenylene or 3-trifluoromethyl-1,4-phenylene; X¹ and X² are independently fluorine or chlorine; Y¹ is hydrogen or methyl; m is 1, 2 or 3, n is 0 or 1, and a sum of m and n is 1, 2 or 3; and p is 0, 1 or 2.

### Advantageous Effects of Invention

An advantage of the invention is a liquid crystal composition satisfying at least one of characteristics such as a high maximum temperature of a nematic phase, a low minimum temperature of the nematic phase, a small viscosity, a suitable optical anisotropy, a large negative dielectric anisotropy, a low threshold voltage, a large specific resistance, a high stability to ultraviolet light, a high stability to heat, a large elastic constant and a small ratio of viscosity to an elastic constant. One aspect of the invention is a liquid crystal composition having a suitable balance regarding at least two of the characteristics. Another aspect is a liquid crystal display device including such a composition. A further aspect is a composition having characteristics such as a suitable optical anisotropy, a large negative dielectric anisotropy, a low threshold voltage, a high stability to ultraviolet light and a large elastic constant, and an AM device having characteristics such as a short response time, a large voltage holding ratio, a large contrast ratio and a long service life.

### Description of Embodiments

Usage of terms herein is as described below. A liquid crystal composition or a liquid crystal display device of the invention may be occasionally abbreviated as "composition" or "device," respectively. The liquid crystal display device is a generic term for a liquid crystal display panel and a liquid crystal display module. "Liquid crystal compound" means a compound having a liquid crystal phase such as a nematic phase or a smectic phase, or a compound having no liquid crystal phase but being useful as a component of the composition. Such a useful compound has a 6-membered ring such as 1, 4-cyclohexylene and 1,4-phenylene, and rod-like molecular structure. An optically active compound may be occasionally added to the composition. Even in the case where the compounds are liquid crystalline, the compounds are classified as an additive herein. A polymerizable compound also includes a known compound having no ring. At least one compound selected from the group of compounds represented by formula (1) may be occasionally abbreviated as "compound (1)." "Compound (1)" means one compound or two or more compounds represented by formula (1). A same rule applies to any other compound represented by any other formula. "At least one" in the context of "replaced" means that not only a position but also the number can be freely selected.

A maximum temperature of the nematic phase may be occasionally abbreviated as "maximum temperature." A minimum temperature of the nematic phase may be occasionally abbreviated as "minimum temperature." An expression "having a large specific resistance" means that the composition has a large specific resistance at room temperature and also at a temperature close to the maximum temperature of the nematic phase in an initial stage, and that the composition has a large specific resistance at room temperature and also at a temperature close to the maximum temperature of the nematic phase even after the device has been used for a long period of time. An expression "having a large voltage holding ratio" means that the device has a large voltage holding ratio at room temperature and also at a temperature close to the maximum temperature of the nematic phase in an initial stage, and that the device has a large voltage holding ratio at room temperature and also at a temperature close to the maximum temperature of the nematic phase even after the device has been used for a long period of time. When characteristics such as an optical anisotropy are described, values obtained according to the measuring methods described in Examples will be used. A first component includes one compound or two or more compounds. "Ratio of the first component" is expressed in terms of weight percent (% by weight) of the first component based on the weight of the liquid crystal composition excluding a second component. "Ratio of the second component" is expressed in terms of a weight ratio (part by weight) of the second component based on 100 parts by weight of a liquid crystal composition excluding the second component. "Ratio of a third component" and "ratio of a fourth component" are expressed in a manner similar to "ratio of the first component." A ratio of the additive mixed with the composition is expressed in terms of weight percent (% by weight) or weight parts per million (ppm) based on the total weight of the liquid crystal composition.

A symbol R¹ is used for a plurality of compounds in chemical formulas of component compounds. Groups selected by two of arbitrary R¹ may be identical or different among the plurality of compounds. In one case, for example, R¹ of compound (1) is ethyl and R¹ of compound (1-1) is ethyl. In another case, R¹ of compound (1) is ethyl and R¹ of compound (1-1) is propyl. A same rule also applies to a symbol R², X¹, Y¹ or the like.

The invention includes items described below.
Item 1. A liquid crystal composition that has a negative dielectric anisotropy, and 4.2 GPa · s/N or less as a ratio of rotational viscosity (γ1) to an elastic constant (K33), and contains at least one compound selected from the group of compounds represented by formula (1) as a first component, and at least one compound selected from the group of compounds represented by formula (2) as a second component: 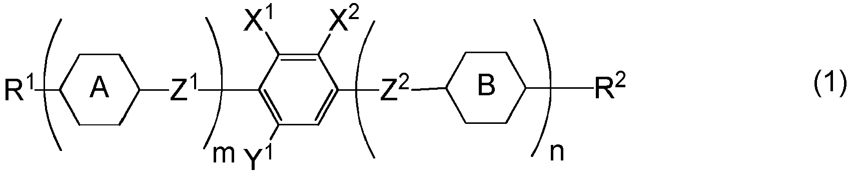 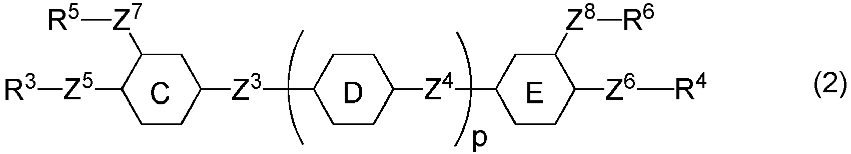 wherein, R¹ is alkenyl having 2 to 12 carbons; R² is alkyl having 1 to 12 carbons, alkoxy having 1 to 12 carbons or alkenyl having 2 to 12 carbons; R³, R⁴, R⁵ and R⁶ are independently hydrogen, alkyl having 1 to 12 carbons, alkoxy having 1 to 12 carbons, alkenyl having 2 to 12 carbons, or alkenyl having 2 to 12 carbons in which at least one of hydrogen is replaced by fluorine, or acryloyloxy, methacryloyloxy, vinyloxy, propenyloxy, oxirane, oxetane or vinylcarbonyl, and at least one of R³, R⁴, R⁵ and R⁶ is acryloyloxy, methacryloyloxy, vinyloxy, propenyloxy, oxirane, oxetane or vinylcarbonyl; Z¹, Z² and Z⁴ are independently a single bond, ethylene, methyleneoxy or carbonyloxy; Z³ is a single bond, ethylene, methyleneoxy, carbonyloxy, -CO-CR⁷=CR⁸-, -CR⁷=CR⁸-CO-, -CR⁷=CR⁸-, -C(=CR⁷R⁸)- or -C(=R⁹)-; R⁷ and R⁸ are independently hydrogen, halogen, alkyl having 1 to 10 carbons, or alkyl having 1 to 10 carbons in which at least one of hydrogen is replaced by fluorine; R⁹ is a group selected from the group of groups represented by formula (R-1); 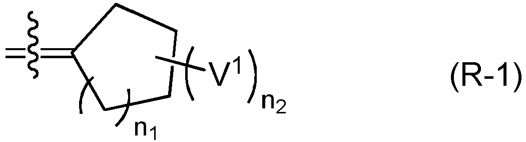 wherein, in formula (R-1), V¹ is independently halogen, alkyl having 1 to 6 carbons, or alkyl having 1 to 6 carbons in which at least one of hydrogen is replaced by fluorine; n₁ is an integer from 1 to 8; n₂ is an integer from 0 to 4;
   Z⁵, Z⁶, Z⁷ and Z⁸ are independently a single bond or alkylene having 1 to 12 carbons, and at least one of hydrogen of the alkylene may be replaced by halogen or -C≡N, and at least one of -CH₂- may be replaced by -O-, -S-, -NH-, -CO-, -CO-O-, -O-CO-, -O-CO-O-, -CH=CH-or -C≡C-; ring A and ring B are independently 1,4-cyclohexylene, 1,4-phenylene in which at least one of hydrogen may be replaced by fluorine or chlorine, or tetrahydropyran-2,5-diyl; ring C and ring E are independently 1,4-cyclohexylene, 1,4-phenylene or 2, 6-naphthalene, and ring C and ring E when R⁵ and R⁶ are hydrogen and Z⁷ and Z⁸ are a single bond may be 2-fluoro-1,4-phenylene, 3-fluoro-1,4-phenylene, 2,3-difluoro-1,4-phenylene, 2-methyl-1,4-phenylene, 3-methyl-1,4-phenylene, 2-trifluoromethyl-1,4-phenylene or 3-trifluoromethyl-1,4-phenylene; ring D is 1,4-cyclohexylene, 1,4-phenylene, 2,6-naphthalene, 2-fluoro-1,4-phenylene, 3-fluoro-1,4-phenylene, 2,3-difluoro-1,4-phenylene, 3,6-difluoro-1,4-phenylene, 2-methyl-1,4-phenylene, 3-methyl-1,4-phenylene, 2-trifluoromethyl-1,4-phenylene or 3-trifluoromethyl-1,4-phenylene; X¹ and X² are independently fluorine or chlorine; Y¹ is hydrogen or methyl; m is 1, 2 or 3, n is 0 or 1, and a sum of m and n is 1, 2 or 3; and p is 0, 1 or 2.
Item 2. The liquid crystal composition according to item 1, containing at least one compound selected from the group of compounds represented by formula (1-1) to formula (1-15) as the first component: 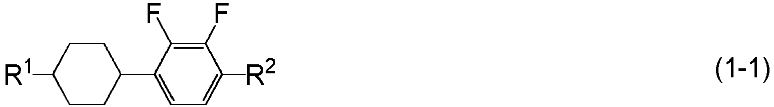 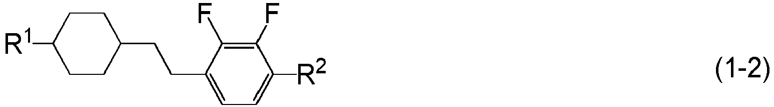 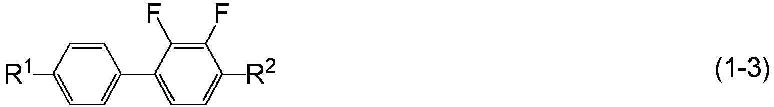 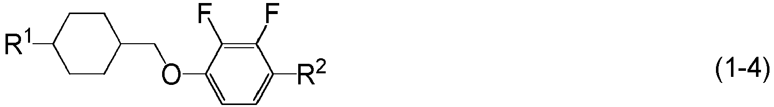 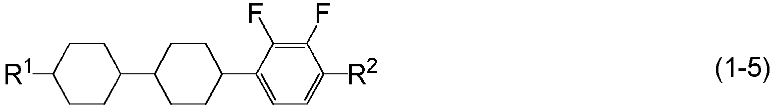 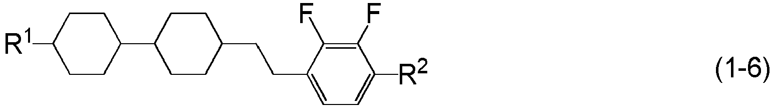 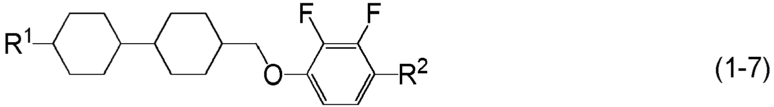 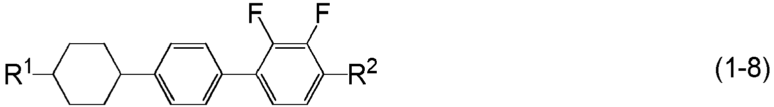 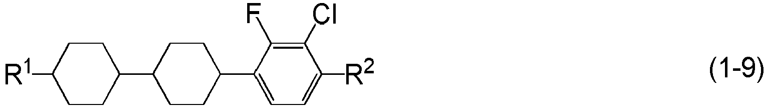 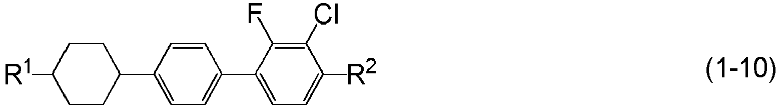 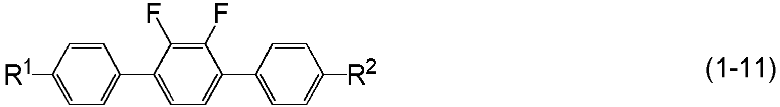 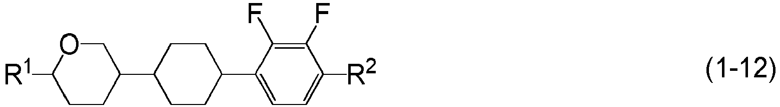 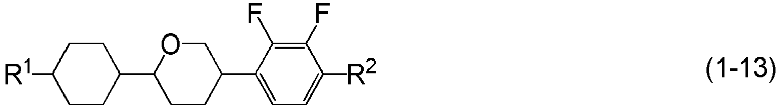 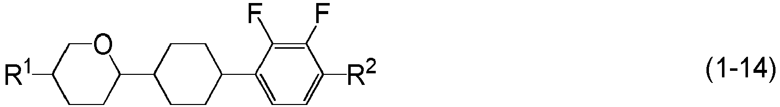 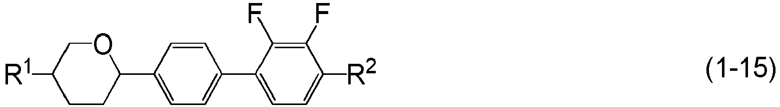 wherein, R¹ is alkenyl having 2 to 12 carbons; R² is alkyl having 1 to 12 carbons, alkoxy having 1 to 12 carbons or alkenyl having 2 to 12 carbons.
Item 3. The liquid crystal composition according to item 1 or 2, containing at least one compound selected from the group of compounds represented by formula (1-1) according to item 2 as the first component.
Item 4. The liquid crystal composition according to any one of items 1 to 3, containing at least one compound selected from the group of compounds represented by formula (1-5) according to item 2 as the first component.
Item 5. The liquid crystal composition according to any one of items 1 to 4, containing at least one compound selected from the group of compounds represented by formula (1-8) according to item 2 as the first component.
Item 6. The liquid crystal composition according to any one of items 1 to 5, containing at least one compound selected from the group of compounds represented by formula (2-1) to formula (2-26) as the second component: 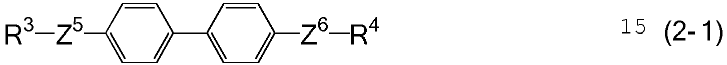 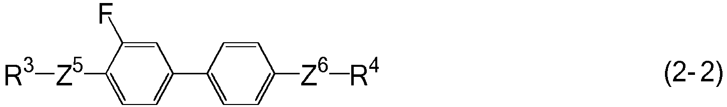 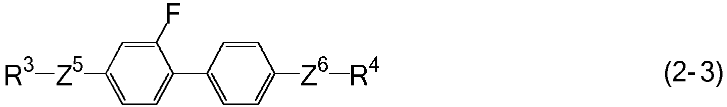 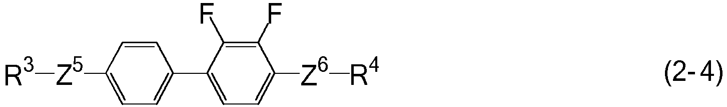 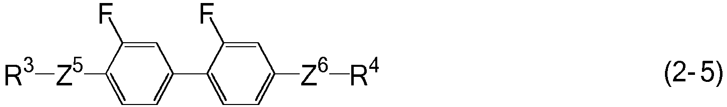 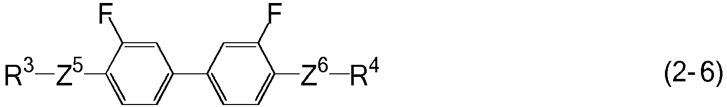 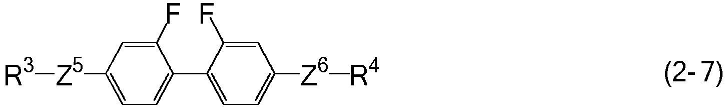 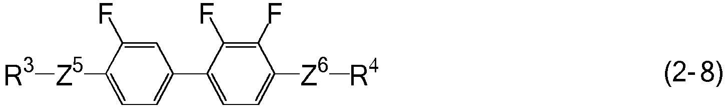 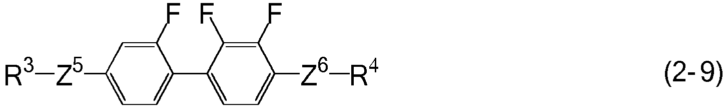 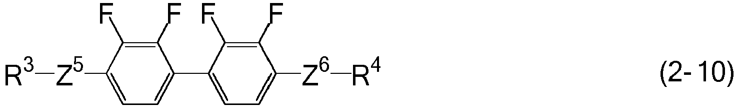 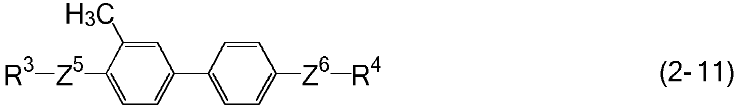 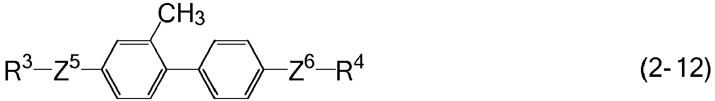 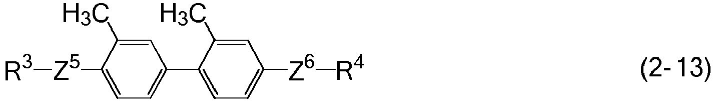 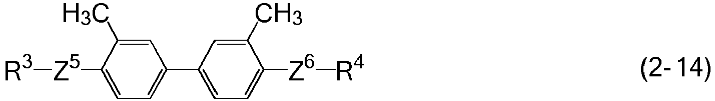 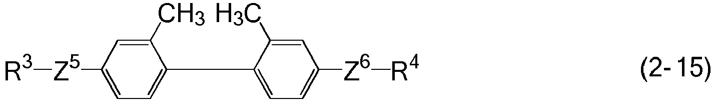 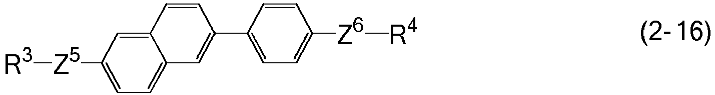 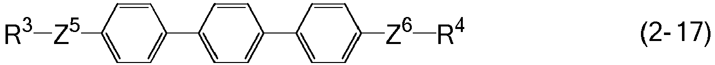 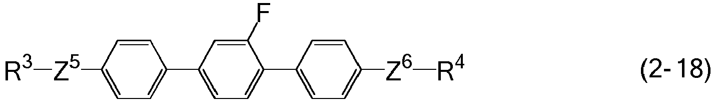 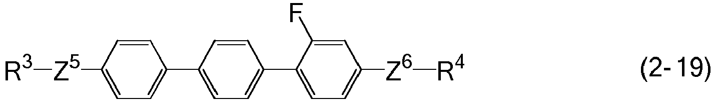 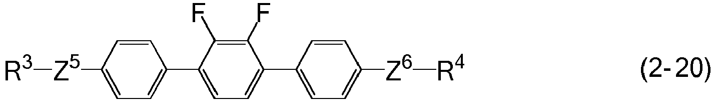 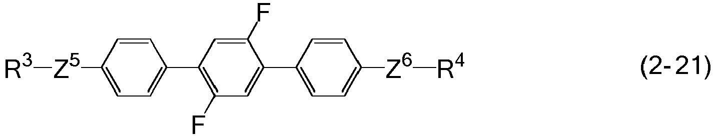 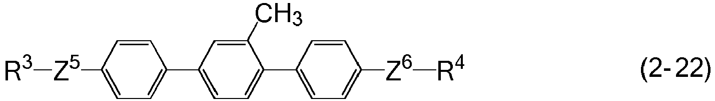 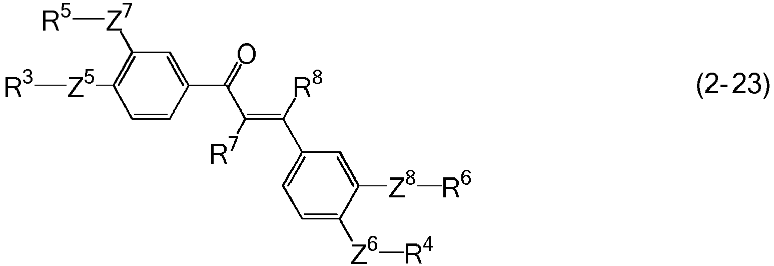 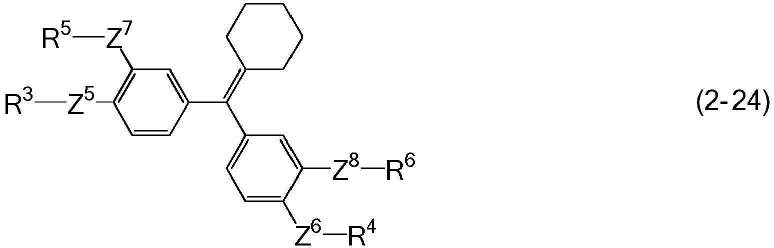 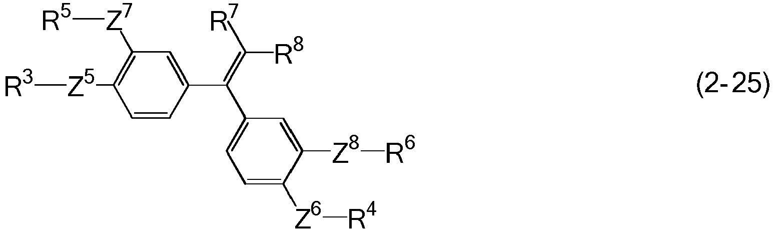 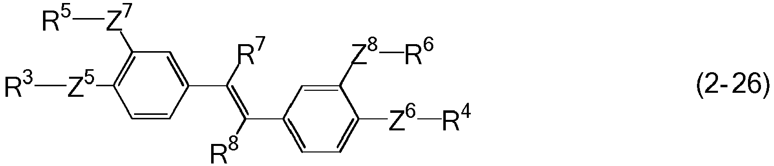 wherein, R³, R⁴, R⁵ and R⁶ are independently hydrogen, alkyl having 1 to 12 carbons, alkoxy having 1 to 12 carbons, alkenyl having 2 to 12 carbons, or alkenyl having 2 to 12 carbons in which at least one of hydrogen is replaced by fluorine, or acryloyl, methacryloyl, vinyloxy, propenyloxy, oxirane, oxetane or vinylcarbonyl, and at least one of R³, R⁴, R⁵ and R⁶ is acryloyloxy, methacryloyloxy, vinyl, vinyloxy, propenyloxy, oxirane, oxetane or vinylcarbonyl; R⁷ and R⁸ are independently hydrogen, halogen, alkyl having 1 to 10 carbons, or alkyl having 1 to 10 carbons in which at least one of hydrogen is replaced by fluorine; and Z⁵, Z⁶, Z⁷ and Z⁸ are independently a single bond or alkylene having 1 to 12 carbons, at least one of hydrogen of the alkylene may be replaced by halogen or -C≡N, at least one of non-adjacent -CH₂-may be replaced by -O-, -S-, -NH-, -CO-, -CO-O-, -O-CO-, -O-CO-O-, -CH=CH- or -C=C-.
Item 7. The liquid crystal composition according to any one of items 1 to 6, containing at least one compound selected from the group of compounds represented by formula (2-2) according to item 6 as the second component.
Item 8. The liquid crystal composition according to any one of items 1 to 7, containing at least one compound selected from the group of compounds represented by formula (2-1) according to item 6 as the second component.
Item 9. The liquid crystal composition according to any one of items 1 to 8, containing at least one compound selected from the group of compounds represented by formula (2-3) according to item 6 as the second component.
Item 10. The liquid crystal composition according to any one of items 1 to 9, containing at least one compound selected from the group of compounds represented by formula (2-18) according to item 6 as the second component.
Item 11. The liquid crystal composition according to any one of items 1 to 10, containing at least one compound selected from the group of compounds represented by formula (2-23) according to item 6 as the second component.
Item 12. The liquid crystal composition according to any one of items 1 to 11, wherein a ratio of the first component is in the range of 1% by weight to 19% by weight based on the weight of a liquid crystal composition excluding the second component, and a ratio of the second component is in the range of 0.05 part by weight to 10 parts by weight based on 100 parts by weight of the liquid crystal composition excluding the second component.
Item 13. The liquid crystal composition according to any one of items 1 to 12, further containing at least one compound selected from the group of compounds represented by formula (3) as a third component: 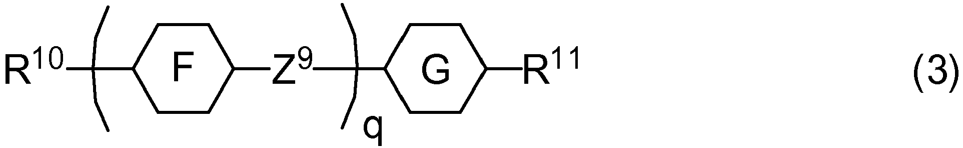 wherein, R¹⁰ and R¹¹ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine; ring F and ring G are independently 1,4-cyclohexylene, 1,4-phenylene, 2-fluoro-1,4-phenylene, 3-fluoro-1,4-phenylene or 2,5-difluoro-1,4-phenylene; Z⁹ is independently a single bond, ethylene, methyleneoxy or carbonyloxy; and q is 1, 2 or 3.
Item 14. The liquid crystal composition according to item 13, containing at least one compound selected from the group of compounds represented by formula (3-1) to formula (3-13) as the third component: 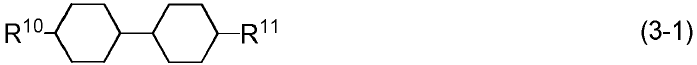 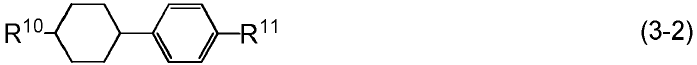 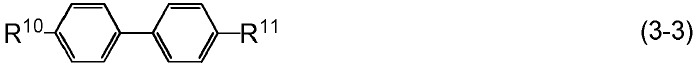 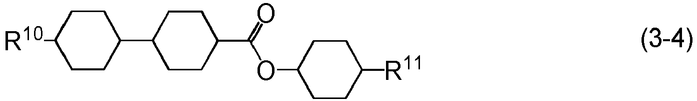 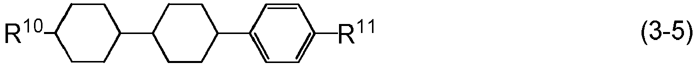 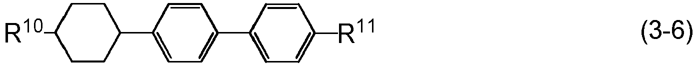 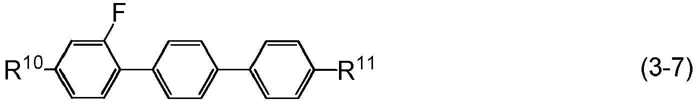 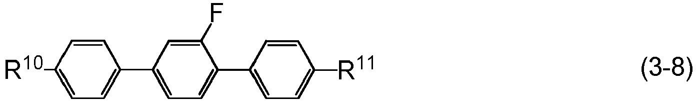 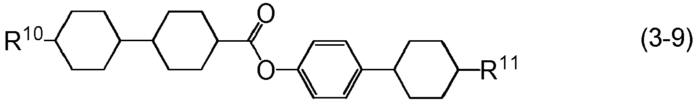 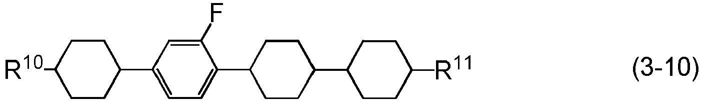 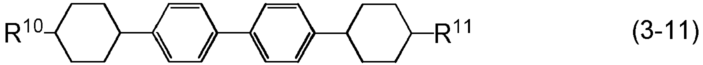 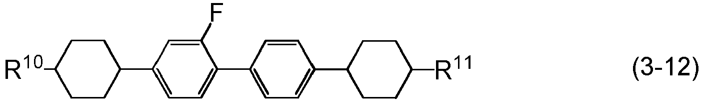 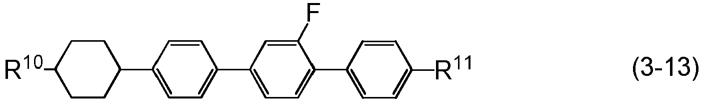 wherein, R¹⁰ and R¹¹ are independently alkyl having 1 to 12 carbons, alkoxy having 1 to 12 carbons, alkenyl having 2 to 12 carbons or alkenyl having 2 to 12 carbons in which at least one of hydrogen is replaced by fluorine.
Item 15. The liquid crystal composition according to item 13 or 14, containing at least one compound selected from the group of compounds represented by formula (3-1) according to item 14 as the third component.
Item 16. The liquid crystal composition according to any one of items 13 to 15, containing at least one compound selected from the group of compounds represented by formula (3-1) according to item 14, and at least one compound selected from the group of compounds represented by formula (3-5) according to item 14 as the third component.
Item 17. The liquid crystal composition according to any one of items 13 to 16, containing at least one compound selected from the group of compounds represented by formula (3-1) according to item 14, and at least one compound selected from the group of compounds represented by formula (3-8) according to item 14 as the third component.
Item 18. The liquid crystal composition according to any one of items 13 to 17, wherein a ratio of the third component is in the range of 15% by weight to 75% by weight based on the weight of the liquid crystal composition excluding the second component.
Item 19. The liquid crystal composition according to any one of items 1 to 18, further containing at least one compound selected from the group of compounds represented by formula (4-1) or formula (4-2) as a fourth component: 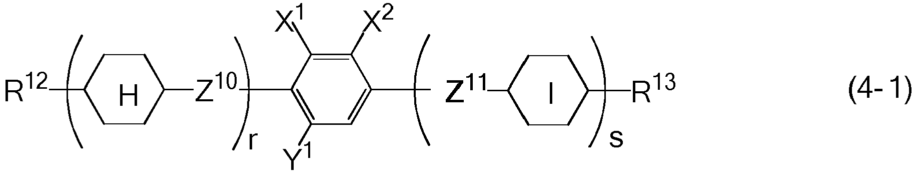 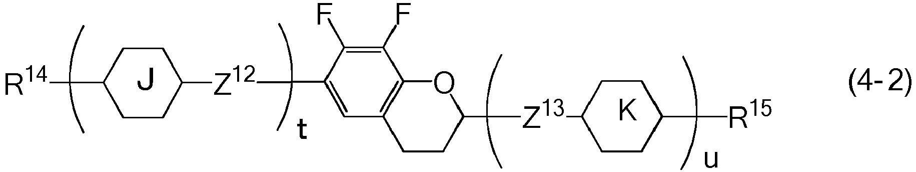 wherein, R¹¹ and R¹² are independently alkyl having 1 to 12 carbons or alkoxy having 1 to 12 carbons; R¹³ and R¹⁴ are independently alkyl having 1 to 12 carbons, alkoxy having 1 to 12 carbons or alkenyl having 2 to 12 carbons; ring H, ring I, ring J and ring K are independently 1,4-cyclohexylene, or 1,4-phenylene in which at least one of hydrogen may be replaced by fluorine or chlorine, or tetrahydropyran-2, 5-diyl; Z¹⁰, Z¹¹, Z¹² and Z¹³ are independently a single bond, ethylene, methyleneoxy or carbonyloxy; X¹ and X² are independently fluorine or chlorine; Y¹ is hydrogen or methyl; r is 1, 2 or 3, s is 0 or 1, and a sum of r and s is 1, 2 or 3; and t is 0, 1 or 2, u is 0 or 1, and a sum of t and u is 1 or 2.
Item 20. The liquid crystal composition according to claim 19, containing at least one compound selected from the group of compounds represented by formula (4-1-1) to formula (4-1-17) and formula (4-2-1) to formula (4-2-5) as the fourth component: 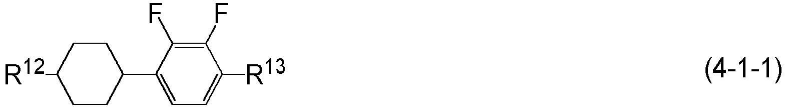 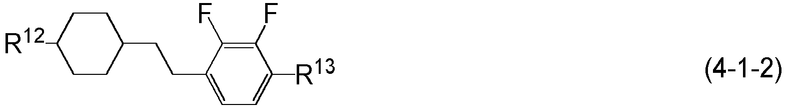 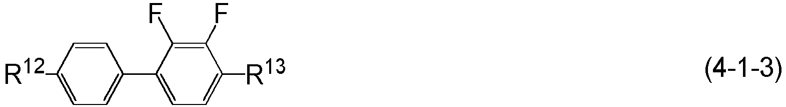 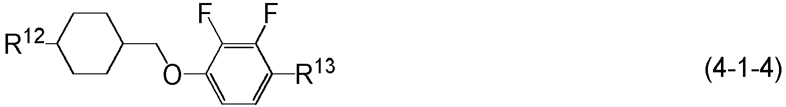 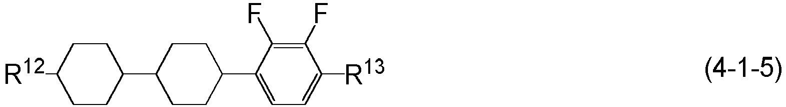 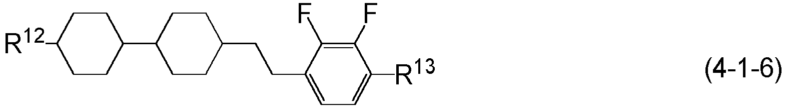 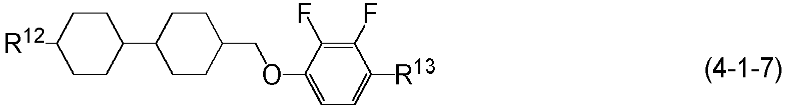 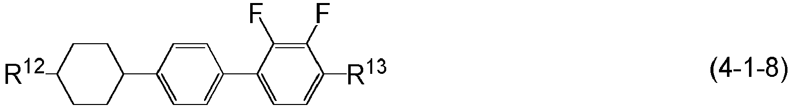 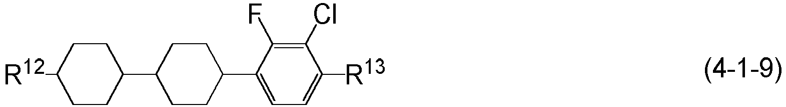 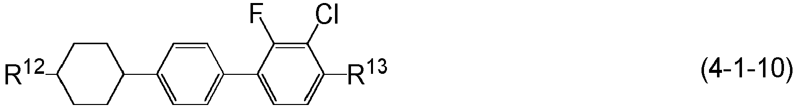 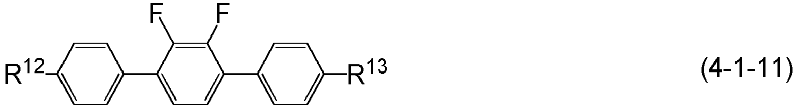 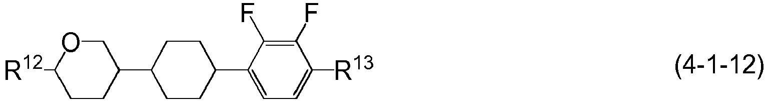 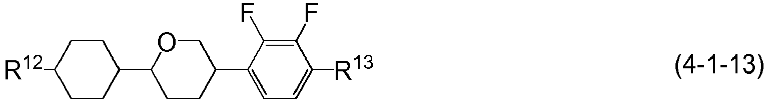 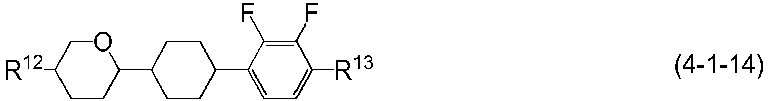 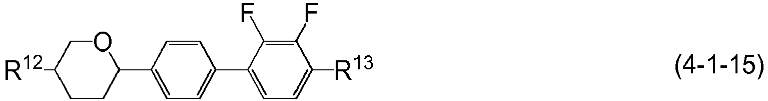 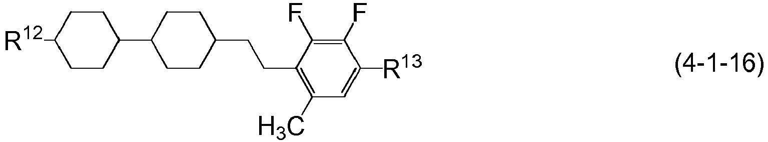 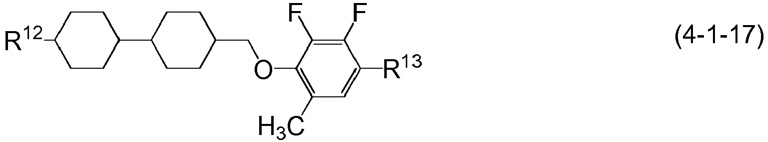 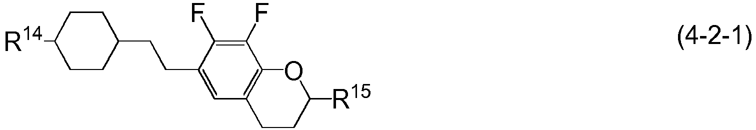 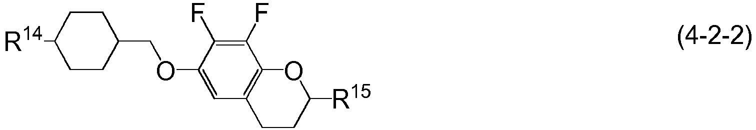 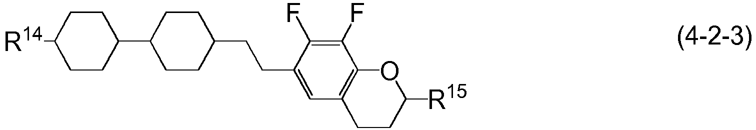 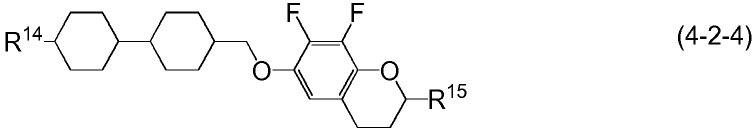 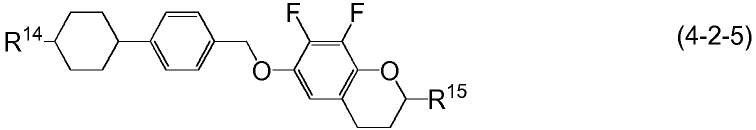 wherein, R¹² and R¹³ are independently alkyl having 1 to 12 carbons or alkoxy having 1 to 12 carbons; and R¹⁴ and R¹⁵ are independently alkyl having 1 to 12 carbons, alkoxy having 1 to 12 carbons or alkenyl having 2 to 12 carbons.
Item 21. The liquid crystal composition according to item 19 or 20, containing at least one compound selected from the group of compounds represented by formula (4-1-1) according to item 20 as the fourth component.
Item 22. The liquid crystal composition according to any one of items 19 to 21, containing at least one compound selected from the group of compounds represented by formula (4-1-1) according to item 20, and at least one compound selected from the group of compounds represented by formula (4-1-5) according to item 20 as the fourth component.
Item 23. The liquid crystal composition according to any one of items 19 to 22, containing at least one compound selected from the group of compounds represented by formula (4-1-1) according to item 20, and at least one compound selected from the group of compounds represented by formula (4-1-8) according to item 20 as the fourth component.
Item 24. The liquid crystal composition according to any one of items 19 to 23, containing at least one compound selected from the group of compounds represented by formula (4-1-3) according to item 20, and at least one compound selected from the group of compounds represented by formula (4-1-7) according to item 20 as the fourth component.
Item 25. The liquid crystal composition according to any one of items 19 to 24, containing at least one compound selected from the group of compounds represented by formula (4-2-4) according to item 20 as the fourth component.
Item 26. The liquid crystal composition according to any one of items 19 to 25, wherein a ratio of the fourth component is in the range of 10% by weight to 70% by weight based on the weight of the liquid crystal composition excluding the second component.
Item 27. The liquid crystal composition according to any one of items 1 to 26, wherein a maximum temperature of a nematic phase is 70°C or higher, an optical anisotropy (25°C) at a wavelength of 589 nanometers is 0.08 or more, and a dielectric anisotropy (25°C) at a frequency of 1 kHz is -2 or less.
Item28. A polymer sustained alignment (PSA) mode liquid crystal display device, comprising two substrates having an electrode layer on at least one of the substrates, and arranging, between the two substrates, a liquid crystal material containing a compound formed by polymerization of a polymerizable compound in the liquid crystal composition according to any one of items 1 to 27.
Item 29. The liquid crystal display device according to item 28, wherein an operating mode in a liquid crystal display device is a TN mode, a VA mode, an IPS mode or a PSA mode, and a driving mode in the liquid crystal display device is an active matrix mode.
Item 30. A method for manufacturing a liquid crystal display device, wherein the liquid crystal display device according to item 28 is manufactured by polymerization of the polymerizable compound by irradiating the liquid crystal composition according to any one of items 1 to 27 arranged between the two substrates with light in a voltage application state.
Item 31. Use of the liquid crystal composition according to any one of items 1 to 27 in a liquid crystal display device.

The invention further includes the following items: (1) the composition, further containing the optically active compound; (2) the composition, further containing an additive such as an antioxidant, an ultraviolet light absorber or an antifoaming agent; (3) an AM device including the composition; (4) a device including the composition, and having a TN, ECB, OCB, IPS, VA or PSA mode; (5) a transmissive device including the composition; (6) use of the composition as the composition having the nematic phase; and (7) use thereof as an optically active composition by adding the optically active compound to the composition.

The composition of the invention will be described in the following order. First, a constitution of the component compounds in the composition will be described. Second, main characteristics of the component compounds and main effects of the compounds on the composition will be described. Third, a combination of components in the composition, a preferred ratio of the components and a basis thereof will be described. Fourth, a preferred embodiment of the component compounds will be described. Fifth, specific examples of the component compounds will be shown. Sixth, the additive that may be mixed with the composition will be described. Seventh, methods for synthesizing the component compounds will be described. Last, an application of the composition will be described.

First, the constitution of the component compounds in the composition will be described. The composition of the invention is classified into composition A and composition B. Composition Amay further contain any other liquid crystal compound, an additive, an impurity or the like in addition to the compound selected from compound (1), compound (2), compound (3) and compound (4). "Any other liquid crystal compound" means a liquid crystal compound different from compound (1), compound (2), compound (3) and compound (4). Such a compound is mixed with the composition for the purpose of further adjusting the characteristics. The additive includes the optically active compound, the antioxidant, the ultraviolet light absorber, a dye, the antifoaming agent and a polymerization initiator. The impurity includes a compound mixed in a process such as preparation of the component compounds. Even in the case where the compound is liquid crystalline, the compound is classified as the impurity herein.

Composition B consists essentially of the compound selected from compound (1), compound (2), compound (3) and compound (4). A term "essentially" means that the composition may contain the additive and the impurity, but does not contain any liquid crystal compound different from the compounds thereof. Composition B has a smaller number of components than composition A has. Composition B is preferred to composition A in view of cost reduction. Composition A is preferred to composition B in view of possibility of further adjusting physical properties by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high", a symbol M stands for "medium", and a symbol S stands for "small" or "low." The symbols L, M and S represent a classification based on a qualitative comparison among the component compounds, and 0 (zero) means "a value is substantially zero."

**Table 2. Characteristics of Compounds**

| Compounds | (1) | (3) | (4) |
|---|---|---|---|
| Maximum temperature | S to L | S to L | S to L |
| Viscosity | M to L | S to M | M to L |
| Optical anisotropy | M to L | S to L | M to L |
| Dielectric anisotropy | M to L ¹⁾ | 0 | M to L ¹⁾ |
| Specific resistance | L | L | L |
| Elastic constant | M to L | S to M | S to M |

| | | | |
|---|---|---|---|
| 1) A value of dielectric anisotropy is negative, and the symbol shows magnitude of an absolute value. | | | |

Upon mixing the component compounds with the composition, the main effects of the component compounds on the characteristics of the composition are as described below. Compound (1) increases the absolute value of dielectric anisotropy, increases the elastic constant and decreases the minimum temperature. Compound (3) decreases the viscosity and increases the maximum temperature. Compound (4) increases the absolute value of dielectric anisotropy and decreases the minimum temperature.

Third, the combination of components in the composition, the preferred ratio of the components and the basis thereof will be described. The combination of components in the composition includes a combination of the first component and the second component, a combination of the first component, the second component and the third component, a combination of the first component, the second component and the fourth component and a combination of the first component, the second component, the third component and the fourth component.

The preferred combination of components in the composition includes the combination of the first component, the second component and the third component or the combination of the first component, the second component, the third component and the fourth component for decreasing the viscosity.

A preferred ratio of the first component is about 1% by weight or more for increasing the absolute value of dielectric anisotropy or for increasing the elastic constant, and about 19% by weight or less for decreasing the minimum temperature, based on the liquid crystal composition excluding the second component. A further preferred ratio is in the range of about 4% by weight to about 18% by weight. A particularly preferred ratio is in the range of about 7% by weight to about 17% by weight.

A preferred ratio of the second component is about 0.05 part by weight or more for aligning liquid crystal molecules, and about 10 parts by weight or less for avoiding a poor display, based on 100 parts by weight of the liquid crystal composition excluding the second component. A further preferred ratio is in the range of about 0.1 part by weight to about 2 parts by weight.

A preferred ratio of the third component is about 15% by weight or more for increasing the maximum temperature or decreasing the viscosity, and about 75% by weight or less for increasing the dielectric anisotropy, based on the liquid crystal composition excluding the second component. A further preferred ratio is in the range of about 25% by weight to about 65% by weight. A particularly preferred ratio is in the range of about 35% by weight to about 55% by weight.

A preferred ratio of the fourth component is about 10% by weight or more for increasing the absolute value of dielectric anisotropy, and about 70% by weight or less for decreasing the minimum temperature, based on the liquid crystal composition excluding the second component. A further preferred ratio is in the range of about 20% by weight to about 60% by weight. A particularly preferred ratio is in the range of about 30% by weight to about 50% by weight.

Fourth, the preferred embodiment of the component compounds will be described. R¹ is alkenyl having 2 to 12 carbons. R² is alkyl having 1 to 12 carbons, alkoxy having 1 to 12 carbons or alkenyl having 2 to 12 carbons. Preferred R² is alkyl having 1 to 12 carbons for increasing stability to ultraviolet light or heat, and alkoxy having 1 to 12 carbons for decreasing the viscosity. Preferred R² is alkyl having 1 to 12 carbons for increasing stability to ultraviolet light or heat, and alkoxy having 1 to 12 carbons for decreasing the viscosity.

R³, R⁴, R⁵ and R⁶ are independently hydrogen, alkyl having 1 to 12 carbons, alkoxy having 1 to 12 carbons, alkenyl having 2 to 12 carbons, or alkenyl having 2 to 12 carbons in which at least one of hydrogen is replaced by fluorine, or acryloyloxy, methacryloyloxy, vinyloxy, propenyloxy, oxirane, oxetane or vinylcarbonyl, and at least one of R³, R⁴, R⁵ and R⁶ is acryloyloxy, methacryloyloxy, vinyl, vinyloxy, propenyloxy, oxirane, oxetane or vinylcarbonyl. Preferred R³, R⁴, R⁵ or R⁶ is acryloyloxy or methacryloyloxy.

R⁷ and R⁸ are independently hydrogen, halogen, alkyl having 1 to 10 carbons, or alkyl having 1 to 10 carbons in which at least one of hydrogen is replaced by fluorine. Preferred R⁷ or R⁸ is hydrogen, fluorine or alkyl having 1 to 3 carbons for increasing photoreactivity. R⁹ is a group selected from the group of groups represented by formula (R-1). 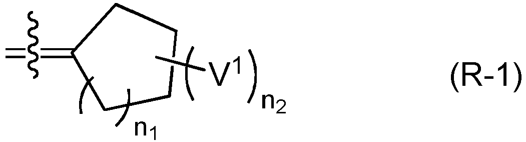 wherein, a wavy line of formula (R-1) shows a site to be bonded in the form of a group. V¹ is halogen, alkyl having 1 to 6 carbons, or alkyl having 1 to 6 carbons in which at least one of hydrogen is replaced by fluorine, two of arbitrary V¹ when n₂ is 2, 3 or 4 may be identical or different. Preferred V¹ is fluorine or alkyl having 1 to 3 carbons. Then, n₁ is an integer from 1 to 8. Preferred n₁ is 1 or 2 for increasing the photoreactivity. Then, n₂ is an integer from 0 to 4. Preferred n₂ is an integer from 0 to 2 for increasing the photoreactivity. Further preferred n₂ is 0.

R¹⁰ and R¹¹ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine. Preferred R¹⁰ or R¹¹ is alkenyl having 2 to 12 carbons for decreasing the viscosity, and alkyl having 1 to 12 carbons for increasing the stability to ultraviolet light or the stability to heat. R¹² and R¹³ are independently alkyl having 1 to 12 carbons or alkoxy having 1 to 12 carbons. Preferred R¹² or R¹³ is alkyl having 1 to 12 carbons for increasing the stability to ultraviolet light or heat, and alkoxy having 1 to 12 carbons for decreasing the viscosity. R¹⁴ and R¹⁵ are independently alkyl having 1 to 12 carbons, alkoxy having 1 to 12 carbons or alkenyl having 2 to 12 carbons. Preferred R¹⁴ or R¹⁵ is alkyl having 1 to 12 carbons for increasing the stability to ultraviolet light or heat, and alkoxy having 1 to 12 carbons for decreasing the viscosity.

In the first component, the third component and the fourth component, preferred alkyl is methyl, ethyl, propyl, butyl, pentyl, hexyl, heptyl or octyl. Further preferred alkyl is ethyl, propyl, butyl, pentyl or heptyl for decreasing the viscosity.

In the second component, preferred alkyl, for example, includes methyl, ethyl, propyl, isopropyl, butyl, isobutyl, t-butyl, pentyl, isopentyl, hexyl, isohexyl, heptyl, isoheptyl, octyl, isooctyl, cyclopropyl, cyclobutyl, 2-methylcyclopropyl, cyclopropylmethyl, cyclopentyl, cyclohexyl, trifluoromethyl, perfluoro-n-butyl, 2,2,2-trifluoroethyl, perfluorohexyl, vinyl, 1-propenyl, 2-propenyl, isopropenyl, 1-butenyl, 2-butenyl, 3-butenyl, 1-pentenyl, 2-pentenyl, 3-pentenyl, 4-pentenyl, 1-methyl-2-butenyl, 1-methyl-3-butenyl, 1,1-dimethyl-2-propenyl, 3-methyl-2-butenyl, 1-hexenyl, 2-hexenyl, 3-hexenyl, 4-hexenyl, 5-hexenyl, 2-methyl-1-pentenyl, 3-methyl-1-pentenyl, 4-methyl-1-pentenyl, 2-methyl-2-pentenyl, 3-methyl-2-pentenyl, 2-ethyl-1-butenyl, 3,3-dimethyl-1-butenyl, ethynyl, 1-propynyl, 2-propynyl, 1-butynyl, 2-butynyl, 3-butynyl, 1-pentynyl, 2-pentynyl, 3-pentynyl, 4-pentynyl, 4-methyl-1-pentenyl, 1-hexynyl, phenyl, naphthyl, anthryl, benzyl, methyloxy, ethyloxy, propyloxy, isopropyloxy, butyloxy, isobutyloxy, s-butyloxy, t-butyloxy, pentyloxy, isopentyloxy, hexyloxy, heptyloxy, cyclopropyloxy, cyclobutyloxy, 2-methylcyclopropyloxy, cyclopropylmethyloxy, cyclopenthyloxy or cyclohexyloxy. Further preferred alkyl includes methyl, ethyl, propyl, isopropyl, trifluoromethyl, 2,2,2-trifluoroethyl, vinyl, 1-propenyl, 2-propenyl, isopropenyl, ethynyl, 1-propynyl, 2-propynyl, methyloxy, ethyloxy, propyloxy or isopropyloxy for increasing the photoreactivity.

In the first component to the fourth component, preferred alkoxy includes methoxy, ethoxy, propoxy, butoxy, pentyloxy, hexyloxy or heptyloxy. Further preferred alkoxy includes methoxy or ethoxy for decreasing the viscosity.

Preferred alkenyl includes vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl includes vinyl, 1-propenyl, 3-butenyl or 3-pentenyl for decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity, or the like. Cis is preferred in alkenyl such as 2-butenyl, 2-pentenyl and 2-hexenyl. In the alkenyl, straight-chain alkenyl is preferred to branched-chain alkenyl.

Preferred examples of alkenyl in which at least one of hydrogen is replaced by fluorine include 2,2-difluorovinyl, 3,3-difluoro-2-propenyl, 4,4-difluoro-3-butenyl, 5,5-difluoro-4-pentenyl and 6,6-difluoro-5-hexenyl. Further preferred examples include 2,2-difluorovinyl and 4,4-difluoro-3-butenyl for decreasing the viscosity.

Alkyl does not include cyclic alkyl. Alkoxy does not include cyclic alkoxy. Alkenyl does not include cyclic alkenyl. With regard to a configuration of 1,4-cyclohexylene, trans is preferred to cis for increasing the maximum temperature.

Ring A, ring B, ring H, ring I, ring J and ring K are independently 1, 4-cyclohexylene, or 1, 4-phenylene in which at least one of hydrogen may be replaced by fluorine or chlorine, or tetrahydropyran-2,5-diyl, and two of arbitrary ring A when m is 2 or 3 may be identical or different, two of arbitrary ring H when r is 2 or 3 may be identical or different, and two of ring J when t is 2 may be identical or different. Preferred ring A, ring B, ring H, ring I, ring J or ring K is 1,4-cyclohexylene for decreasing the viscosity, tetrahydropyran-2,5-diyl for increasing the absolute value of dielectric anisotropy, and 1, 4-phenylene for increasing the optical anisotropy. Tetrahydropyran-2,5-diyl includes:

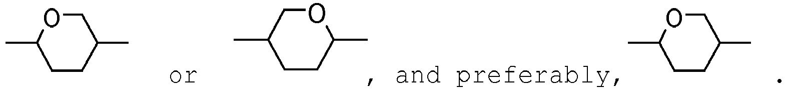

Ring C and ring E are independently 1,4-cyclohexylene, 1,4-phenylene or 2,6-naphthalene, and ring C and ring E when R⁵ and R⁶ are hydrogen and Z⁷ and Z⁸ are a single bond may be 2-fluoro-1,4-phenylene, 3-fluoro-1,4-phenylene, 2,3-difluoro-1,4-phenylene, 2-methyl-1,4-phenylene, 3-methyl-1,4-phenylene, 2-trifluoromethyl-1,4-phenylene or 3-trifluoromethyl-1,4-phenylene. Ring D is 1,4-cyclohexylene, 1,4-phenylene, 2,6-naphthalene, 2-fluoro-1,4-phenylene, 3-fluoro-1,4-phenylene, 2,3-difluoro-1,4-phenylene, 3,6-difluoro-1,4-phenylene, 2-methyl-1,4-phenylene, 3-methyl-1,4-phenylene, 2-trifluoromethyl-1,4-phenylene or 3-trifluoromethyl-1,4-phenylene. Two of arbitrary ring D when p is 2 may be identical or different.

Preferred ring C, ring D or ring E is 1,4-phenylene.

Ring F and ring G are independently 1,4-cyclohexylene, 1,4-phenylene, 2-fluoro-1,4-phenylene, 3-fluoro-1,4-phenylene or 2,5-difluoro-1,4-phenylene, and two of arbitrary ring F when q is 2 or 3 may be identical or different. Preferred ring F or ring G is 1,4-cyclohexylene for decreasing the viscosity, and 1,4-phenylene for increasing the optical anisotropy.

With regard to a configuration of 1,4-cyclohexylene, trans is preferred to cis for increasing the maximum temperature. Then, "2-fluoro-1,4-phenylene" or the like is represented by a ring in which a left-hand side is defined as 1-position to show presence of a difference in positions of fluorine between "2-fluoro-1,4-phenylene" and "3-fluoro-1,4-phenylene."

Z¹, Z² and Z⁴ are independently a single bond, ethylene, methyleneoxy or carbonyloxy, two of arbitrary Z¹ when m is 2 or 3 may be identical or different, and two of Z⁴ when p is 2 may be identical or different. Preferred Z¹ or Z² is a single bond for decreasing the viscosity, ethylene for decreasing the minimum temperature, and methyleneoxy for increasing the absolute value of dielectric anisotropy. Preferred Z⁴ is a single bond for increasing the photoreactivity.

Z³ is a single bond, ethylene, methyleneoxy, carbonyloxy, -CO-CR⁷=CR⁸, -CR⁷=CR⁸-CO-, -CR⁷=CR⁸, -C(=CR⁷R⁸)- or -C(=R⁹)-. Preferred Z³ is -CO-CR⁷=CR⁸-, -CR⁷=CR⁸- or -C(=R⁹)- for increasing polymerization reactivity of a polymerizable compound and obtaining characteristics of shortening a response time of the device.

Z³ is a bonding group of a type with which conjugated systems of conjugate rings are linked. A configuration of a double bond in Z³ of compound (2) is a cis isomer, a trans isomer or a mixture of the cis isomer and the trans isomer. A same rule applies to a configuration of a double bond of a bonding group in compound (2-23), compound (2-24), compound (2-25), compound (2-26) and so forth.

Z⁵, Z⁶, Z⁷ and Z⁸ are independently a single bond or alkylene having 1 to 12 carbons, and at least one of hydrogen of the alkylene may be replaced by halogen or -C≡N, and at least one of -CH₂- may be replaced by -O-, -S-, -NH-, -CO-, -CO-O-, -O-CO-, -O-CO-O-, -CH=CH- or -C≡C-. On the occasion, adjacent -CH₂- is not replaced by an identical group. Preferred Z⁵, Z⁶, Z⁷ or Z⁸ is a single bond for increasing the photoreactivity.

Z⁹ is a single bond, ethylene, methyleneoxy or carbonyloxy, and two of arbitrary Z⁹ when q is 2 or 3 may be identical or different. Preferred Z⁹ is a single bond for decreasing the viscosity.

Z¹⁰, Z¹¹, Z¹² and Z¹³ are independently a single bond, ethylene, methyleneoxy or carbonyloxy, two of arbitrary Z¹⁰ when r is 2 or 3 may be identical or different, and two of Z¹² when t is 2 may be identical or different. Preferred Z¹⁰, Z¹¹, Z¹² or Z¹³ is a single bond for decreasing the viscosity, ethylene for decreasing the minimum temperature, and methyleneoxy for increasing the absolute value of dielectric anisotropy.

X¹ and X² are independently fluorine or chlorine. Preferred X¹ or X² is fluorine for decreasing the viscosity.

Y¹ is hydrogen or methyl. Preferred Y¹ is hydrogen for decreasing the viscosity.

Then, m is 1, 2 or 3, n is 0 or 1, and a sum of m and n is 1, 2 or 3. Preferred m is 1 for decreasing the viscosity, and 2 or 3 for increasing the maximum temperature. Preferred n is 0 for decreasing the viscosity, and 1 for decreasing the minimum temperature.

Then, p is 0, 1 or 2. Preferred p is 0 for decreasing the minimum temperature. Then, q is 1, 2 or 3. Preferred q is 1 for decreasing the viscosity, and 2 or 3 for increasing the maximum temperature.

Then, r is 1, 2 or 3, s is 0 or 1, and a sum of r and s is 1, 2 or 3. Preferred r is 1 for decreasing the viscosity, and 2 or 3 for increasing the maximum temperature. Preferred s is 0 for decreasing the viscosity, and 1 for decreasing the minimum temperature.

Then, t is 0, 1 or 2, u is 0 or 1, and a sum of t and u is 1 or 2. Preferred t is 2 for increasing the maximum temperature. Preferred u is 0 for decreasing the viscosity.

Compound (2) can form a homopolymer or a copolymer by homopolymerization, copolymerization or copolymerization with any other polymerizable compound.

Fifth, the specific examples of the component compounds will be shown. In the preferred compounds described below, R¹⁶ is straight-chain alkenyl having 2 to 12 carbons. R¹⁷ and R²³ are independently straight-chain alkyl having 1 to 12 carbons or straight-chain alkoxy having 1 to 12 carbons. R¹⁸, R¹⁹ and R²⁰ are independently acryloyloxy or methacryloyloxy. R²¹ and R²² are independently straight-chain alkyl having 1 to 12 carbons or straight-chain alkenyl having 2 to 12 carbons. Z⁵, Z⁶ and Z⁸ are independently a single bond or alkylene having 1 to 12 carbons, at least one of hydrogen of the alkylene may be replaced by halogen or -C=N, and at least one of non-adjacent -CH₂- may be replaced by -O-, -S-, -NH-, -CO-, -CO-O-, -O-CO-, -O-CO-O-, -CH=CH- or -C≡C-.

Preferred compound (1) includes compound (1-1-1) to compound (1-15-1). Further preferred compound (1) includes compound (1-1-1) to compound (1-8-1) and compound (1-12-1) to compound (1-15-1). Particularly preferred compound (1) includes compound (1-1-1), compound (1-5-1) and compound (1-8-1). Preferred compound (2) includes compound (2-1-1) to compound (2-26-1). Further preferred compound (2) includes compound (2-1-1), compound (2-2-1), compound (2-3-1), compound (2-4-1), compound (2-5-1), compound (2-6-1), compound (2-7-1), compound (2-18-1), compound (2-20-1) and compound (2-23-1). Particularly preferred compound (2) includes compound (2-2-1), compound (2-3-1), compound (2-4-1), compound (2-18-1) and compound (2-23-1). Preferred compound (3) includes compound (3-1-1) to compound (3-13-1). Further preferred compound (3) includes compound (3-1-1), compound (3-5-1), compound (3-7-1), compound (3-8-1) and compound (3-13-1). Particularly preferred compound (3) includes compound (3-1-1), compound (3-5-1) and compound (3-8-1). Preferred compound (4-1) includes compound (4-1-1-1) to compound (4-1-17-1). Further preferred compound (4-1) includes compound (4-1-1-1) to compound (4-1-8-1) and compound (4-1-12-1) to compound (4-1-15-1). Particularly preferred compound (4-1) includes compound (4-1-1-1), compound (4-1-3-1), compound (4-1-5-1), compound (4-1-8-1) and compound (4-1-13-1). Preferred compound (4-2) includes compound (4-2-1-1) to compound (4-2-5-1). Further preferred compound (4-2) includes compound (4-2-2-1) and compound (4-2-4-1).

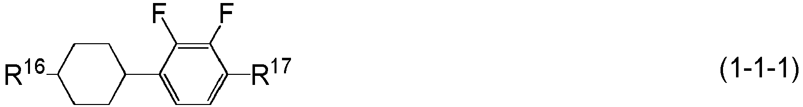

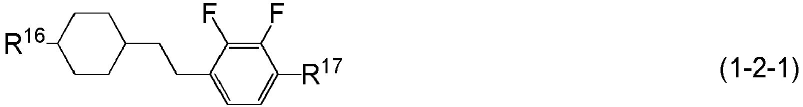

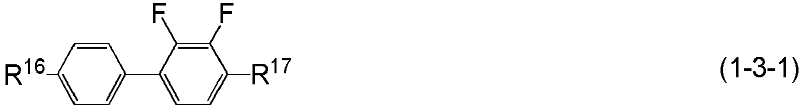

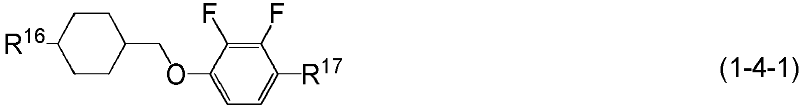

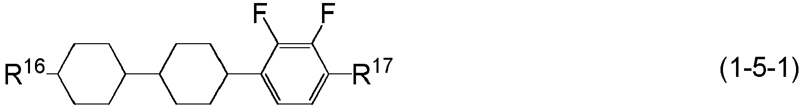

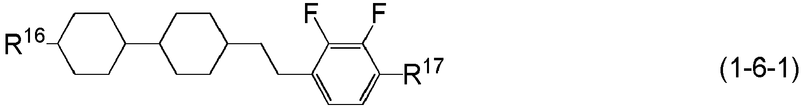

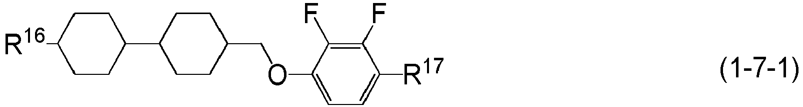

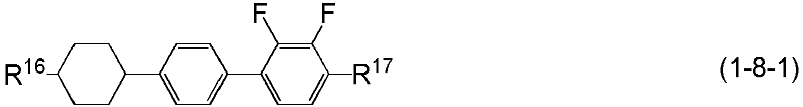

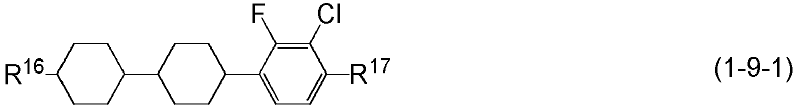

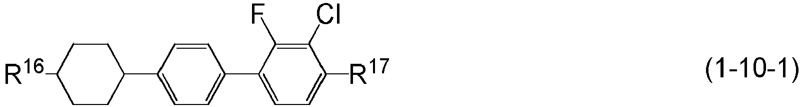

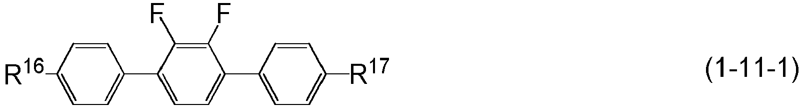

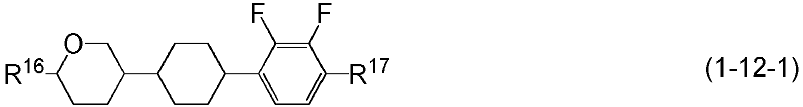

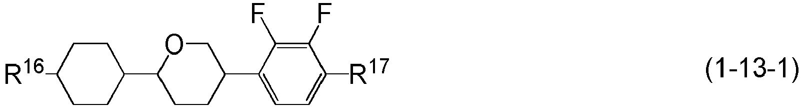

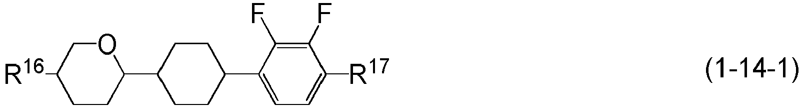

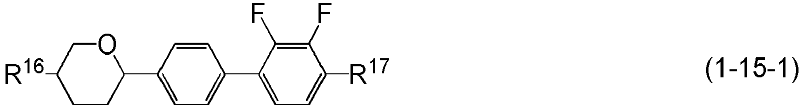

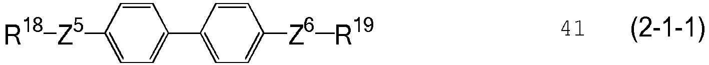

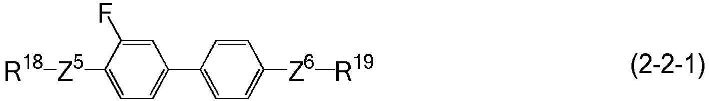

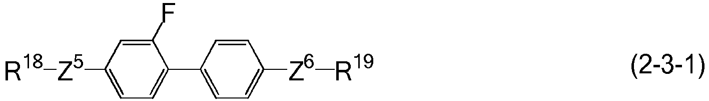

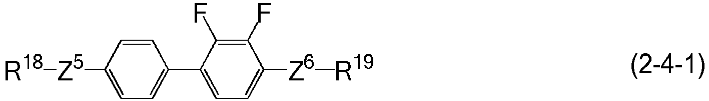

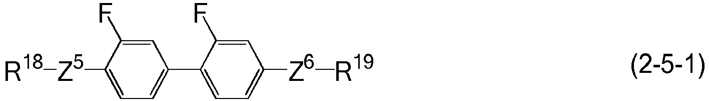

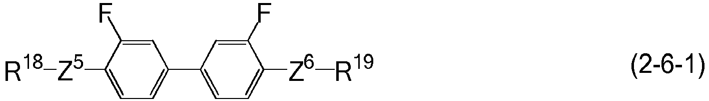

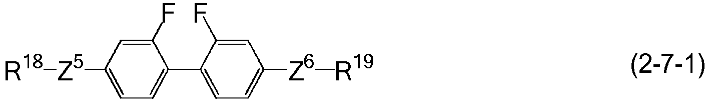

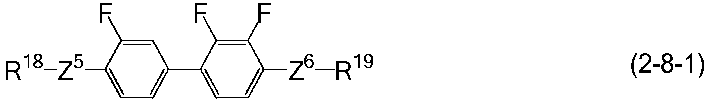

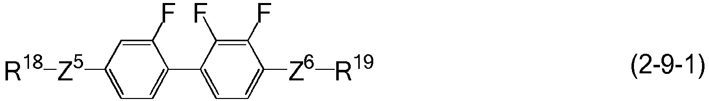

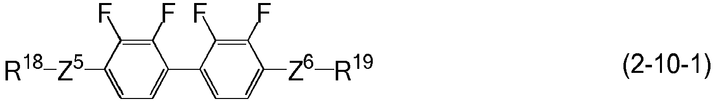

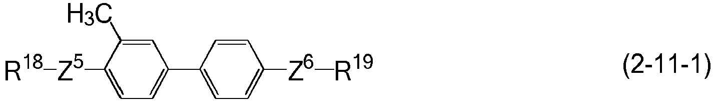

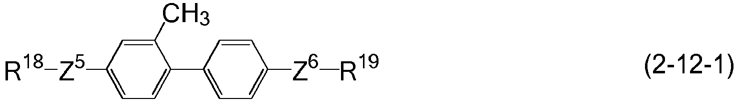

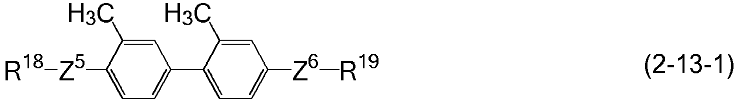

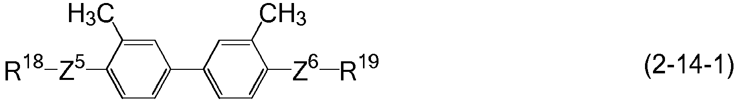

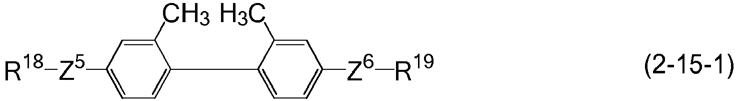

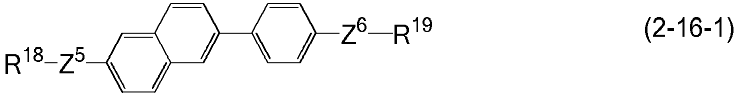

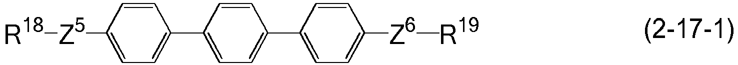

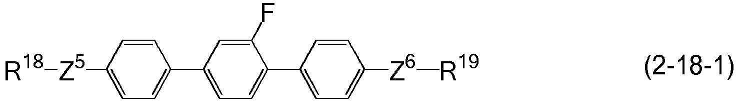

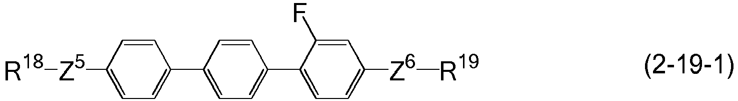

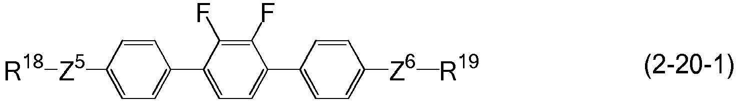

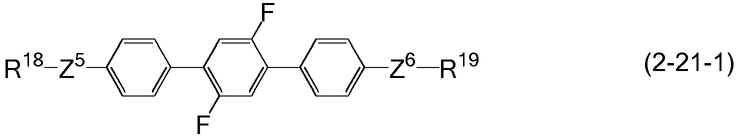

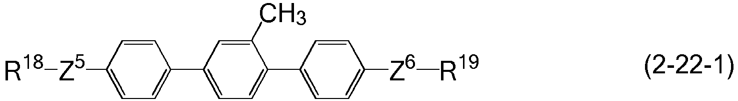

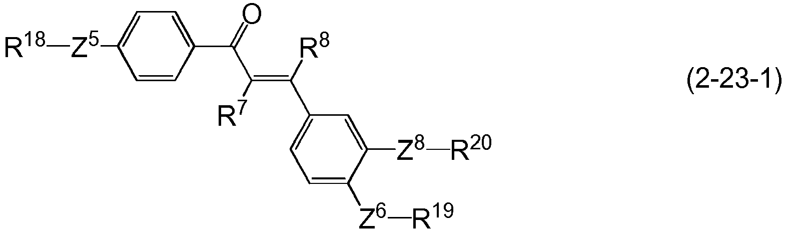

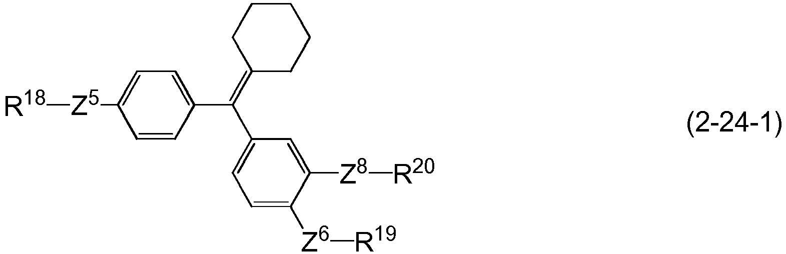

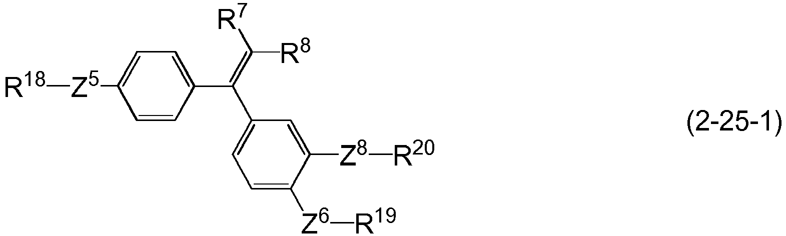

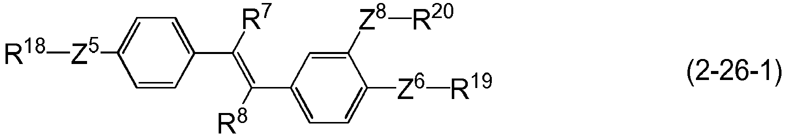

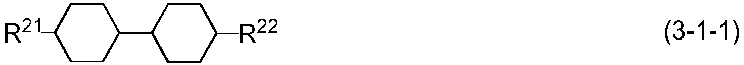

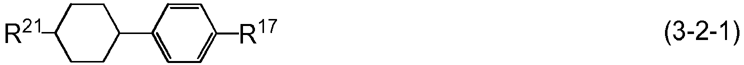

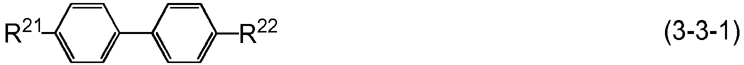

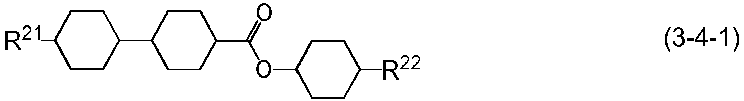

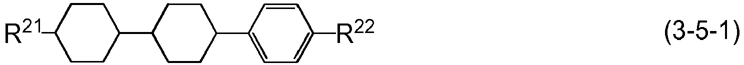

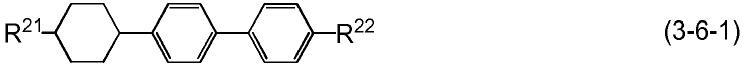

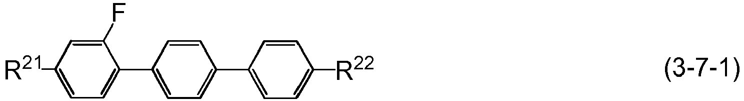

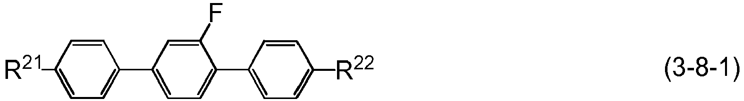

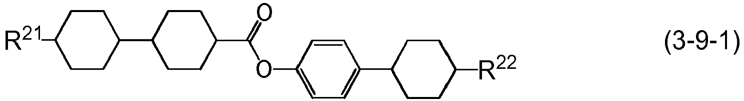

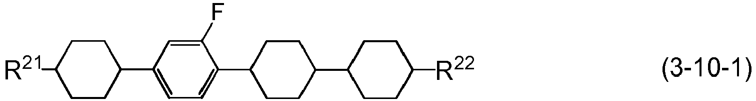

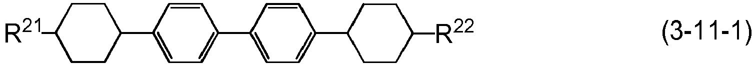

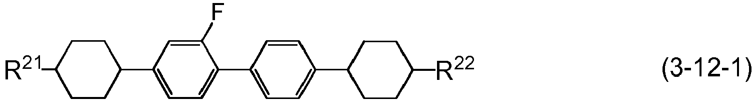

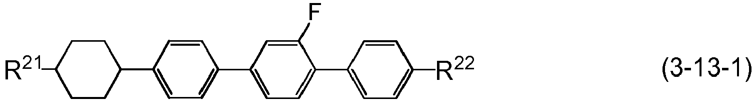

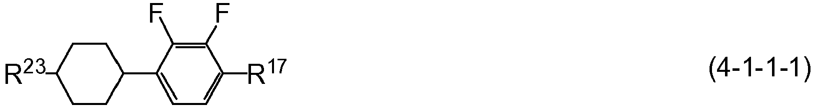

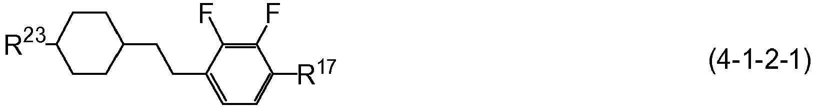

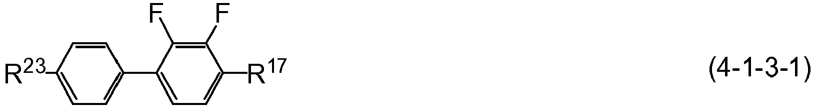

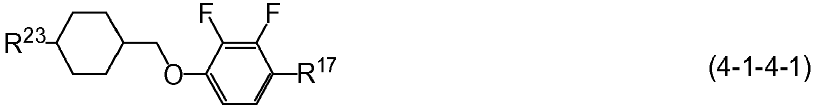

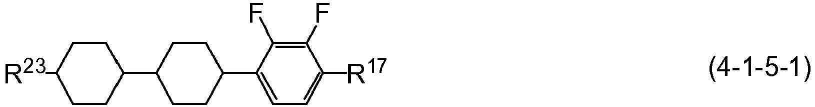

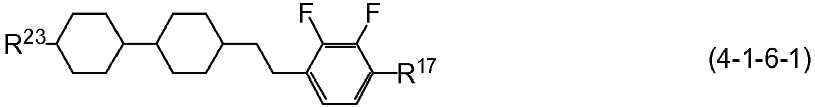

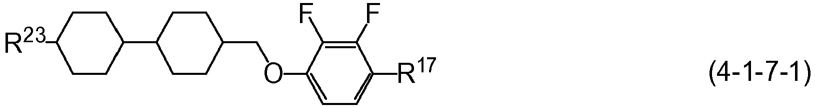

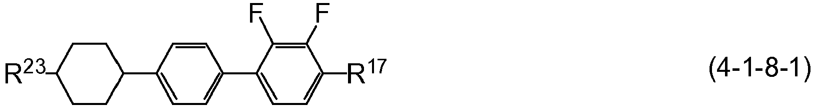

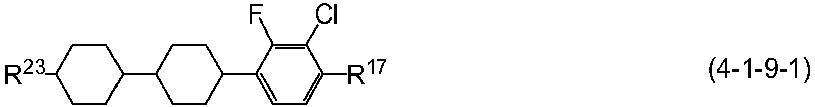

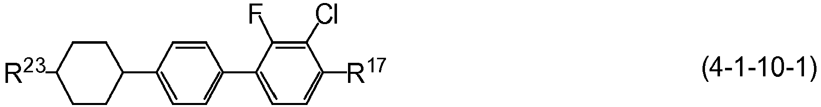

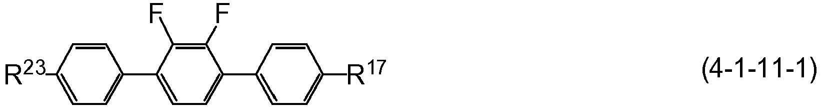

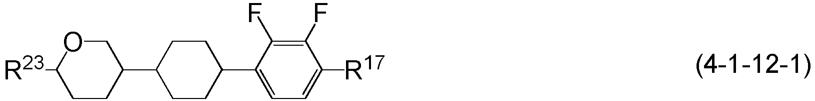

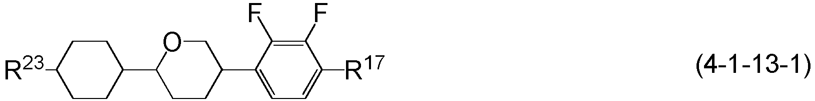

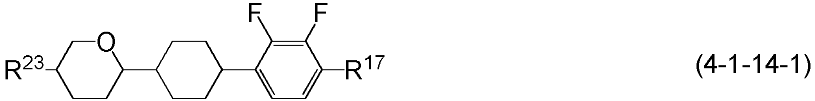

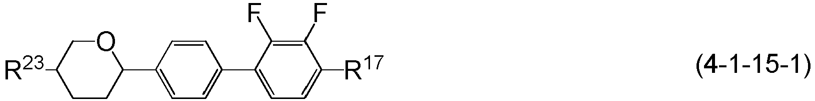

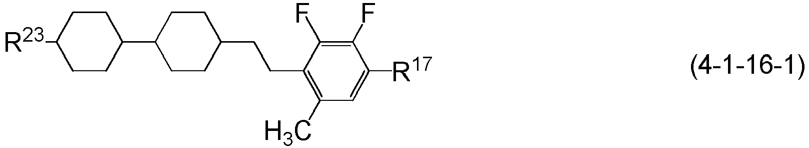

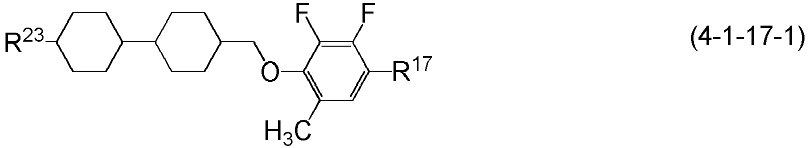

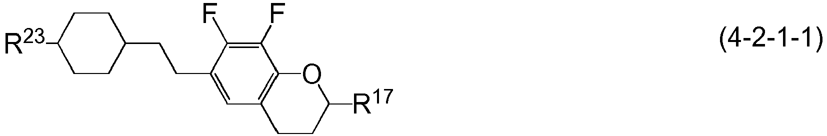

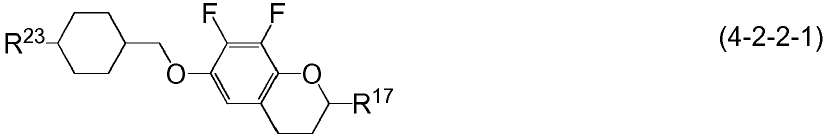

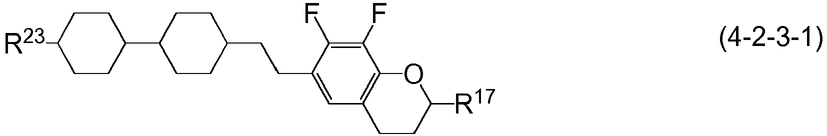

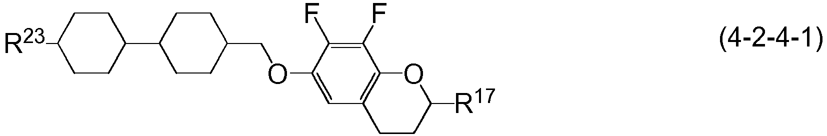

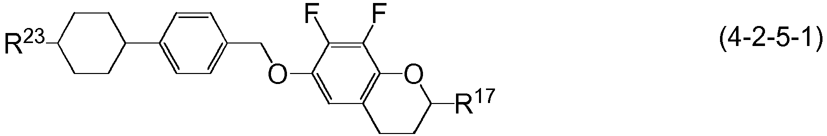

Sixth, the additive that may be mixed with the composition will be described. Such an additive includes the optically active compound, the antioxidant, the ultraviolet light absorber, the dye, the antifoaming agent and the polymerization initiator. The optically active compound is mixed with the composition for the purpose of inducing a helical structure in liquid crystals to give a twist angle. Examples of such a compound include compound (5-1) to compound (5-5). A preferred ratio of the optically active compound is about 5% by weight or less. A further preferred ratio is in the range of about 0.01% by weight to about 2% by weight.

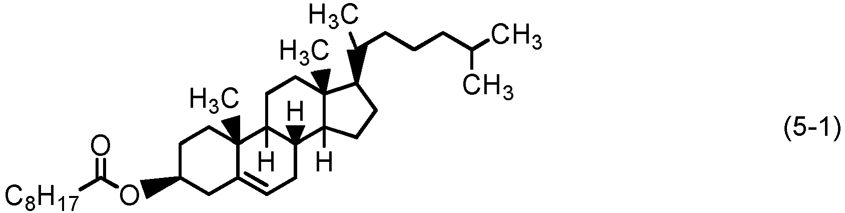

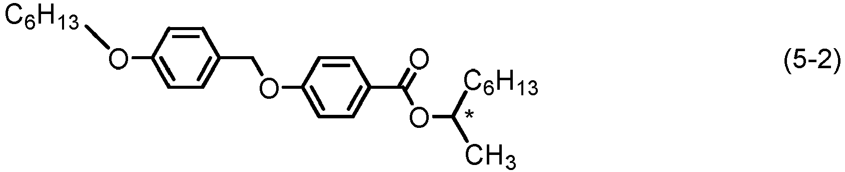

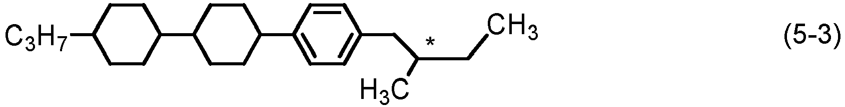

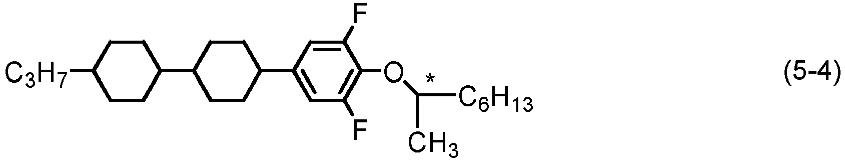

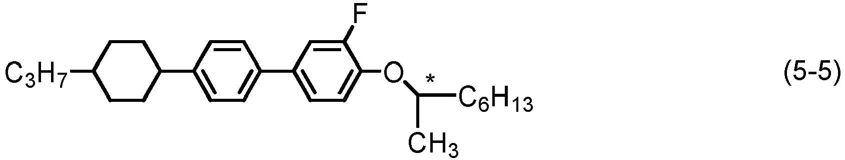

The antioxidant is mixed with the composition for the purpose of preventing a decrease in the specific resistance caused by heating in air, or maintaining a large voltage holding ratio at room temperature and also at a temperature close to the maximum temperature of the nematic phase even after the device has been used for a long period of time.

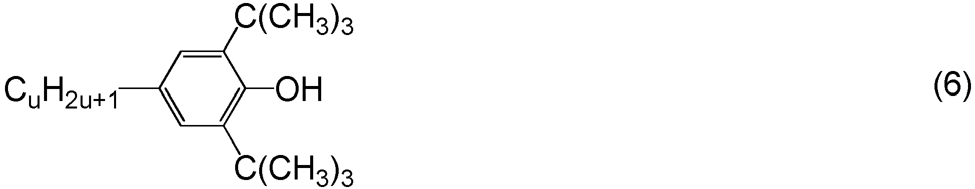

Preferred examples of the antioxidant include compound (6) where u is an integer from 1 to 9. In compound (6), preferred u is 1, 3, 5, 7 or 9. Further preferred w is 1 or 7. Compound (6) where u is 1 is effective in preventing a decrease in the specific resistance caused by heating in air because the compound (6) has a large volatility. Compound (6) where u is 7 is effective in maintaining a large voltage holding ratio at room temperature and also at a temperature close to the maximum temperature of the nematic phase even after the device has been used for a long period of time because the compound (6) has a small volatility. A preferred ratio of the antioxidant is about 50 ppm or more for achieving the effect thereof, and about 600 ppm or less for avoiding a decrease in the maximum temperature or avoiding an increase in the minimum temperature. A further preferred ratio is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred ratio of the ultraviolet light absorber or the stabilizer is about 50 ppm or more for achieving the effect thereof, and about 10,000 ppm or less for avoiding a decrease in the maximum temperature or avoiding an increase in the minimum temperature. A further preferred ratio is in the range of about 100 ppm to about 10,000 ppm.

A dichroic dye such as an azo dye or an anthraquinone dye is mixed with the composition to be adapted for a device having a guest host (GH) mode. A preferred ratio of the dye is in the range of about 0.01% by weight to about 10% by weight.

The antifoaming agent such as dimethyl silicone oil or methyl phenyl silicone oil is mixed with the composition for preventing foam formation. A preferred ratio of the antifoaming agent is 1 ppm or more for achieving the effect thereof, and about 1,000 ppm or less for avoiding a poor display. A further preferred ratio is in the range of about 1 ppm to about 500 ppm.

The liquid crystal composition of the invention is adapted for the device having the polymer sustained alignment (PSA) mode because the liquid crystal composition includes the polymerizable compound. Preferred examples of the polymerizable compound include compound (2) and a compound having a polymerizable group, such as an acrylate, a methacrylate, a vinyl compound, a vinyloxy compound, a propenyl ether, an epoxy compound (oxirane, oxetane) and a vinyl ketone. Particularly preferred examples include an acrylate derivative or a methacrylate derivative. A preferred ratio of the polymerizable compound is about 0.05 part by weight or more for achieving the effect thereof, and 10 parts by weight or less for avoiding a poor display, based on 100 parts by weight of the composition excluding the polymerizable compound. A further preferred ratio is in the range of about 0.1 part by weight to about 2 parts by weight. The polymerizable compound is preferably polymerized by irradiation with ultraviolet light or the like in the presence of a suitable initiator such as a photopolymerization initiator. Suitable conditions for polymerization, suitable types of the initiator and suitable amounts thereof are known to a person skilled in the art and are described in literature. For example, Irgacure 651 (registered trademark; BASF), Irgacure 184 (registered trademark; BASF) or Darocure 1173 (registered trademark; BASF), each being a photoinitiator, is suitable for radical polymerization. A ratio of the photopolymerization initiator is preferably in the range of about 0.1% by weight to about 5% by weight in the polymerizable compound, further preferably, in the range of about 1% by weight to about 3% by weight. A polymerized compound may be arranged through a process of arranging the liquid crystal composition containing the polymerizable compound between two substrates in the liquid crystal display device and polymerizing the polymerizable compound while applying a voltage between opposing electrode layers on the substrates, or a liquid crystal composition containing a preliminarily polymerized compound may be arranged between the two substrates in the liquid crystal display device.

Next, the methods for synthesizing any other liquid crystal compound contained in the liquid crystal composition will be described. The compounds can be prepared according to known methods. Examples of synthetic methods will be shown. Compound (1-1-1) is prepared by the method described in JP 2000-053602 A. Compound (2-18-1) is prepared by the method described in JP H7-101900 A (1995). Compound (3-5-1) is prepared by the method described in JP S57-165328 A. Compound (4-1-1-1) and compound (4-1-5-1) are prepared by the method described in JP H2-503441 A. Compound (4-2-4-1) is prepared by the method described in JP 2005-35986 A. A compound represented by formula (6) where u is 1 is available from Sigma-Aldrich Corporation. Compound (6) where u is 7 and so forth are prepared according to the method described in US 3, 660, 505 B.

Any compounds whose synthetic methods are not described above can be prepared according to the methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to publicly known methods using the thus obtained compounds. For example, the component compounds are mixed and dissolved in each other by heating.

Any compounds whose synthetic methods are not described above can be prepared according to the methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to publicly known methods using the thus obtained compounds. For example, the component compounds are mixed and dissolved in each other by heating.

Last, the application of the composition will be described. Most of the compositions have a minimum temperature of about -10°C or lower, a maximum temperature of about 70°C or higher, and an optical anisotropy in the range of about 0.07 to about 0.20. The device including the composition has a large voltage holding ratio. The composition is suitable for use in the AM device. The composition is particularly suitable for use in a transmissive AM device. The composition having an optical anisotropy in the range of about 0.08 to about 0.25 may be prepared by controlling the ratio of the component compounds or by mixing with any other liquid crystal compound. The composition can be used as the composition having the nematic phase and as the optically active composition by adding the optically active compound.

The composition can be used for the AM device. The composition can also be used for a PM device. The composition can be used for an AM device and a PM device both having a mode such as PC, TN, STN, ECB, OCB, IPS, FFS, VA or PSA. Use for the AM device having the OCB mode, the IPS mode or the FFS mode is particularly preferred. In the AM device having the IPS mode or the FFS mode, alignment of liquid crystal molecules in no voltage application state may be parallel or vertical to a panel substrate. The devices may be of a reflective type, a transmissive type or a transflective type. Use for the transmissive device is preferred. The composition can also be used for an amorphous silicon-TFT device or a polycrystal silicon-TFT device. The composition can also be used for a nematic curvilinear aligned phase (NCAP) device prepared by microencapsulating the composition, or for a polymer dispersed (PD) device in which a three-dimensional network-polymer is formed in the composition.

### Examples

In order to evaluate characteristics of a composition and a compound to be contained in the composition, the composition and the compound were made a measurement object. When the measurement object was a composition, the measurement object was measured as a sample as was, and values obtained were described. When the measurement object was a compound, a sample for measurement was prepared by mixing the compound (15% by weight) with a base liquid crystal (85% by weight). Values of characteristics of the compound were calculated using values obtained by measurement, according to an extrapolation method: (extrapolated value) = {(measured value of a sample for measurement) - 0.85 × (measured value of a base liquid crystal)} / 0.15. When a smectic phase (or crystals) precipitated at the ratio thereof at 25°C, a ratio of the compound to the base liquid crystal was changed step by step in the order of (10% by weight : 90% by weight), (5% by weight : 95% by weight) and (1% by weight : 99% by weight). Values of maximum temperature, optical anisotropy, viscosity and dielectric anisotropy with regard to the compound were determined according to the extrapolation method.

Components of the base liquid crystal and ratios thereof were as described below.

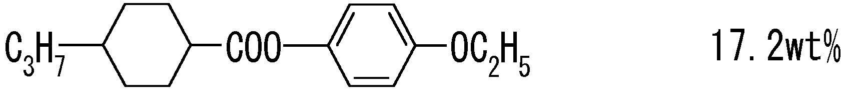

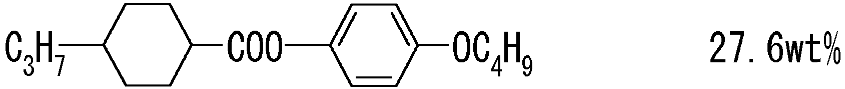

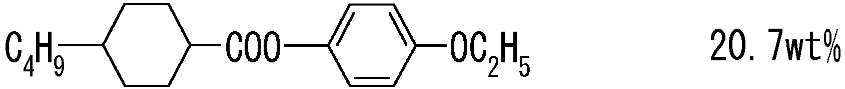

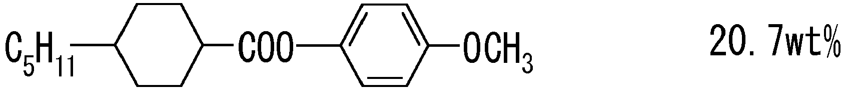

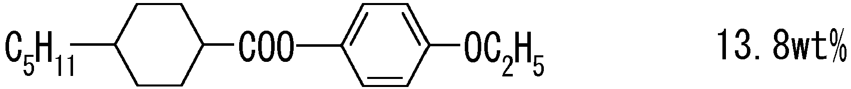

Values of the characteristics were measured according to the methods describedbelow. Most of the methods are applied as described in Standard of Japan Electronics and Information Technology Industries Association (hereinafter, abbreviated as JEITA) discussed and established as the Standard of JEITA (JEITA ED-2521B), or as modified thereon.

Maximum Temperature of a nematic phase (NI; °C): A sample was placed on a hot plate in a melting point apparatus equipped with a polarizing microscope and was heated at a rate of 1°C per minute. Temperature when part of the sample began to change from a nematic phase to an isotropic liquid was measured. A maximum temperature range of the nematic phase may be occasionally abbreviated as "maximum temperature."

Minimum Temperature of a nematic phase (T_{C}; °C): Sample each having a nematic phase were put in glass vials and kept in freezers at temperatures of 0°C, -10°C, -20°C, -30°C and -40°C for 10 days, and then liquid crystal phases were observed. For example, when the sample maintained the nematic phase at -20°C and changed to crystals or a smectic phase at -30°C, T_{C} was expressed as T_{C} < -20°C. A minimum temperature range of the nematic phase may be occasionally abbreviated as "minimum temperature."

Viscosity (bulk viscosity; η; measured at 20°C; mPa·s): A cone-plate (E type) rotational viscometer was used for measurement.

Viscosity (rotational viscosity; γ1; measured at 25°C; mPa·s) : Measurement was carried out according to a method described in M. Imai et al., Molecular Crystals and Liquid Crystals, Vol. 259, 37 (1995). A sample was put in a VA device in which a twist angle was 0 degrees and a distance (cell gap) between two glass substrates was 20 micrometers. A voltage was applied stepwise to the device in the range of 39 V to 50 V at an increment of 1 V. After 0.2 second with no voltage, a voltage was applied repeatedly under conditions of only one rectangular wave (rectangular pulse; 0.2 second) and no application (2 seconds). A peak current and a peak time of a transient current generated by the applied voltage were measured. A value of rotational viscosity was obtained from measured values thereof and calculation equation (8) described on page 40 of the paper presented by M. Imai et al. A value of dielectric anisotropy required for the calculation was determined using the device by which the rotational viscosity was measured and by a method described below.

Optical anisotropy (refractive index anisotropy; Δn; measured at 25°C): Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index (n∥) was measured when the direction of polarized light was parallel to the direction of rubbing. A refractive index (n⊥) was measured when the direction of polarized light was perpendicular to the direction of rubbing. A value of optical anisotropy was calculated from an equation: Δn = n∥ - n⊥.

Dielectric anisotropy (Δε; measured at 25°C): A value of dielectric anisotropy was calculated from an equation: Δε = ε∥ - ε⊥. A dielectric constant (ε∥ and ε⊥) was measured as described below.
(1) Measurement of dielectric constant (ε∥): An ethanol (20 mL) solution of octadecyl triethoxysilane (0.16 mL) was applied to a well-cleaned glass substrate. After rotating the glass substrate with a spinner, the glass substrate was heated at 150°C for 1 hour. A sample was put in a VA device in which a distance (cell gap) between two glass substrates was 4 micrometers, and the device was sealed with an ultraviolet-curable adhesive. Sine waves (0.5 V, 1 kHz) were applied to the device, and after 2 seconds, a dielectric constant (ε∥) in the major axis direction of liquid crystal molecules was measured.
(2) Measurement of dielectric constant (ε⊥): A polyimide solution was applied to a well-cleaned glass substrate. After calcining the glass substrate, rubbing treatment was applied to the alignment film obtained. A sample was put in a TN device in which a distance (cell gap) between two glass substrates was 9 micrometers and a twist angle was 80 degrees. Sine waves (0.5 V, 1 kHz) were applied to the device, and after 2 seconds, a dielectric constant (ε⊥) in the minor axis direction of the liquid crystal molecules was measured.

Threshold voltage (Vth; measured at 25°C; V): An LCD-5100 luminance meter made by Otsuka Electronics Co., Ltd. was used for measurement. A light source was a halogen lamp. A sample was put in a normally black mode VA device in which a distance (cell gap) between two glass substrates was 4 micrometers and a rubbing direction was anti-parallel, and the device was sealed with an ultraviolet-curable adhesive. A voltage (60 Hz, rectangular waves) to be applied to the device was stepwise increased from 0 V to 20 V at an increment of 0.02 V. On the occasion, the device was irradiated with light from a direction perpendicular to the device, and an amount of light transmitted through the device was measured. A voltage-transmittance curve was prepared, in which a maximum amount of light corresponds to 100% transmittance and a minimum amount of light corresponds to 0% transmittance. A threshold voltage is a voltage at 10% transmittance.

Voltage holding ratio (VHR-1; measured at 25°C; %) : A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is a percentage of area A to area B.

Voltage holding ratio (VHR-2; measured at 80°C; %) : A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is a percentage of area A to area B.

Voltage holding ratio (VHR-3; measured at 25°C; %): Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and then the device was irradiated with light for 20 minutes. A light source was an ultra high-pressure mercury lamp USH-500D (made by Ushio, Inc.), and a distance between the device and the light source was 20 centimeters. In measuring VHR-3, a decaying voltage was measured for 16.7 milliseconds. A composition having a large VHR-3 has a large stability to ultraviolet light. A value of VHR-3 is preferably 90% or more, and further preferably, 95% or more.

Voltage holding ratio (VHR-4; measured at 25°C; %) : A TN device into which a sample was injected was heated in a constant-temperature bath at 80°C for 500 hours, and then stability to heat was evaluated by measuring a voltage holding ratio. In measuring VHR-4, a decaying voltage was measured for 16.7 milliseconds. A composition having a large VHR-4 has a large stability to heat.

Response time (τ; measured at 25°C; ms) : An LCD-5100 luminance meter made by Otsuka Electronics Co., Ltd. was used for measurement. A light source was a halogen lamp. A low-pass filter was set at 5 kHz. A sample was put in a normally black mode PVA device in which a distance (cell gap) between two glass substrates was 3.2 micrometers and a rubbing direction was anti-parallel, and the device was sealed with an ultraviolet-curable adhesive. The device was irradiated with ultraviolet light of 25 mW/cm² (EXECURE4000-D lamp made by HOYA CANDEO OPTRONICS CORPORATION) for 400 seconds while a voltage of 15 V was applied to the device. Rectangular waves (60 Hz, 10 V, 0.5 second) were applied to the device. On the occasion, the device was irradiated with light from a direction perpendicular to the device, and an amount of light transmitted through the device was measured. A maximum amount of light corresponds to 100% transmittance, and a minimum amount of light corresponds to 0% transmittance. A response time is a period of time needed for a change from 0% transmittance to 90% transmittance (rise time; millisecond).

Specific resistance (p; measured at 25°C; Ω cm) : Into a vessel equipped with electrodes, 1.0 milliliter of a sample was injected. A DC voltage (10 V) was applied to the vessel, and a DC current after 10 seconds was measured. A specific resistance was calculated from the following equation: (specific resistance) = {(voltage) × (electric capacity of a vessel) } / { (direct current) × (dielectric constant of vacuum)}.

Elastic constant (K11 : spray elastic constant, K33 : bend elastic constant; measured at 25°C; pN) : Elastic Constant Measurement System Model EC-1 made by TOYO Corporation was used for measurement. A sample was put in a vertical alignment cell in which a distance (cell gap) between two glass substrates was 20 micrometers. An electric charge from 20 V to 0 V was applied to the cell, and electrostatic capacity and applied voltage were measured. Measured values of electrostatic capacity (C) and applied voltage (V) were fitted to equation (2.98) and equation (2.101) on page 75 of the "Liquid Crystal Device Handbook (Ekisho Debaisu Handobukku, in Japanese)" (The Nikkan Kogyo Shimbun, Ltd.), and a value of elastic constant was obtained from equation (2.100).

### ¹H-NMR analysis

As a measuring apparatus, DRX-500 (made by Bruker BioSpin Corporation) was used. A sample manufactured in Examples or the like was dissolved in a deuterated solvent such as CDCl₃ in which the sample was soluble, and measurement was carried out under conditions such as room temperature, 500 MHz, and 24 times of accumulation. In addition, in describing nuclear magnetic resonance spectra obtained, s, d, t, q and m stand for a singlet, a doublet, a triplet, a quartet and a multiplet, respectively. Tetramethylsilane (TMS) was used as a reference material for a zero point of chemical shifts (δ values). ¹⁹F-NMR analysis was also conducted using an identical apparatus.

Gas chromatographic analysis: GC-14B Gas Chromatograph made by Shimadzu Corporation was used for measurement. A carrier gas was helium (2 mL per minute). A sample injector and a detector (FID) were set to 280°C and 300°C, respectively. A capillary column DB-1 (length 30 m, bore 0.32 mm, film thickness 0.25 µm; dimethylpolysiloxane as a stationary phase, non-polar) made by Agilent Technologies, Inc. was used for separation of component compounds. After the column was kept at 200 °C for 2 minutes, the column was heated to 280°C at a rate of 5°C per minute. A sample was prepared in an acetone solution (0.1% by weight), and then 1 microliter of the solution was injected into the sample injector. A recorder was C-R5A Chromatopac made by Shimadzu Corporation or the equivalent thereof. The resulting gas chromatogram showed a retention time of a peak and a peak area corresponding to each of the component compounds.

As a solvent for diluting the sample, chloroform, hexane and so forth may also be used. The following capillary columns may also be used for separating the component compounds: HP-1 (length 30 m, bore 0.32 mm, film thickness 0.25 µm) made by Agilent Technologies, Inc., Rtx-1 (length 30 m, bore 0.32 mm, film thickness 0.25 µm) made by Restek Corporation and BP-1 (length 30 m, bore 0.32 mm, film thickness 0.25 µm) made by SGE International Pty. Ltd. A capillary column CBP1-M50-025 (length 50 m, bore 0.25 mm, film thickness 0.25 µm) made by Shimadzu Corporation may also be used for the purpose of avoiding an overlap of peaks of the compounds.

A ratio of liquid crystal compounds contained in the composition may be calculated by the method as described below. The liquid crystal compounds can be detected by a gas chromatograph. A ratio of the peak areas in the gas chromatogram corresponds to a ratio (in the number of moles) of the liquid crystal compounds. When the capillary columns described above were used, a correction coefficient of each of the liquid crystal compounds may be regarded as 1 (one). Accordingly, a ratio (% by weight) of the liquid crystal compounds was calculated from the ratio of the peak areas.

The invention will be described in detail by way of Examples. The invention is not limited by the Examples described below. The compounds in Comparative Examples and Examples were described using symbols according to definitions in Table 3 below. In Table 3, a configuration of 1, 4-cyclohexylene is trans. A parenthesized number next to a symbolized compound corresponds to the number of the compound. A symbol (-) means any other liquid crystal compound. A ratio (percentage) of the liquid crystal compounds is expressed in terms of weight percent (% by weight) based on the total weight of the liquid crystal composition, and the liquid crystal composition includes an impurity. Values of the characteristics of the composition were summarized in the last part.

**Table 3 Method for Description of Compounds using Symbols**

| R-(A₁)-Z₁-·····-Zₙ-(Aₙ)-R' | | | |
|---|---|---|---|
| 1) Let-terminal Group R- | Symbol | 4) Ring Structure -Aₙ- | Symbol |
| CₙH₂ₙ₊₁- | n- | 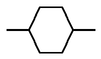 | H |
| CₙH₂ₙ₊₁O- | nO- | | |
| CₘH₂ₘ₊₁OCₙH₂ₙ - | mOn- | 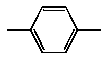 | B |
| CH₂=CH- | V- | | |
| CₙH₂ₙ₊₁-CH=CH- | nV- | 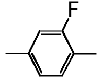 | B(F) |
| CH₂=CH-CₙH₂ₙ- | Vn- | | |
| CₘH₂ₘ₊₁-CH=CH-CₙH₂ₙ- | mVn- | | |
| CF₂=CH- | VFF- | 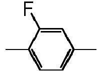 | B(2F) |
| CF₂=CH-CₙH₂ₙ- | VFFn- | | |
| CH₂=CH-COO- | AC- | | |
| CH₂=C(CH₃)-COO- | MAC- | 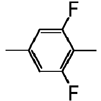 | B(F,F) |
| 2) Right-terminal Group -R' | Symbol | | |
| -CₙH₂ₙ₊₁ | -n | | |
| -OCₙH₂ₙ₊₁ | -On | | |
| -CH=CH₂ | -V | 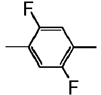 | B(2F,5F) |
| -CH=CH-CₙH₂ₙ₊₁ | -Vn | | |
| -CₙH₂ₙ-CH=CH₂ | -nV | | |
| -CₘH₂ₘ-CH=CH-CₙH₂ₙ₊₁ | -mVn | 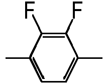 | B(2F,3F) |
| -CH=CF₂ | -VFF | | |
| -OCO-CH=CH₂ | -AC | | |
| -OCO-C(CH₃)=CH₂ | -MAC | 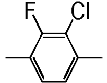 | B(2F,3CL) |
| 3) Bonding Group -Zₙ- | Symbol | | |
| -CₙH₂ₙ- | n | | |
| -COO- | E | 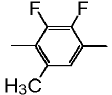 | B(2F,3F,6Me) |
| -CH=CH- | V | | |
| -CH=CHO- | VO | | |
| -OCH=CH- | OV | 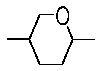 | dh |
| -CH₂O- | 1O | | |
| -OCH₂- | O1 | | |
| 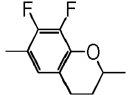 | Cro(7F,8F) | 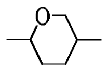 | Dh |
| 5) Examples of Description | | | |
| Example 1 V-HHB(2F.3F)-02 | | Example 2 MAC-VO-BB-MAC | |
| 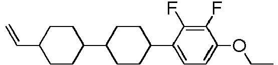 | | 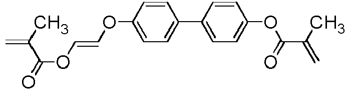 | |
| Example 3 V-HHB-1 | | Example 4 3-DhHB(2F.3F)-O2 | |
| 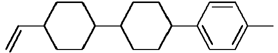 | | 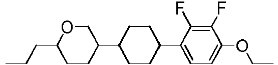 | |

### Example 1

| | | |
|---|---|---|
| V-HB(2F,3F)-O2 | 1-1-1) | 8% |
| V-HB(2F,3F)-O4 | (1-1-1) | 8% |
| V-HH-3 | (3-1-1) | 27% |
| V-HHB-1 | (3-5-1) | 7% |
| 2-BB(F)B-3 | (3-8-1) | 5% |
| 3-HHB(2F,3F)-O2 | (4-1-5-1) | 10% |
| 5-HHB(2F,3F)-O2 | (4-1-5-1) | 10% |
| 3-HBB(2F,3F)-O2 | (4-1-8-1) | 10% |
| 5-HBB(2F,3F)-O2 | (4-1-8-1) | 10% |
| 3-HH1OCro(7F,8F)-5 | (4-2-4-1) | 5% |

Into 100 parts by weight of the composition, 0.3 part by weight of compound (2-1-1) described below was added.

| | |
|---|---|
| MAC-BB-MAC | (2-1-1) |

NI = 91.4°C; Tc < -30°C; γ1 = 56.7 mPa·s; Δn = 0.105; Δε = -3.0; Vth = 2.59 V; VHR-1 = 99.0%; VHR-2 = 98.2%; VHR-2 = 98.0%; K33 = 15.8 pN; γ1/K33 = 3.59 GPa·s/N.

### Comparative Example 1

A liquid crystal composition was formulated in which the compound of the first component according to the invention was replaced by compound (4-1-1-1) of a fourth component in the composition according to Example 1. The composition was prepared and measured by the method described above. Components and characteristics of the composition are as described below.

| | | |
|---|---|---|
| V-HH-3 | (3-1-1) | 27% |
| V-HHB-1 | (3-5-1) | 7% |
| 2-BB(F)B-3 | (3-8-1) | 5% |
| 2-HB(2F,3F)-O2 | (4-1-1-1) | 8% |
| 2-HB(2F,3F)-O4 | (4-1-1-1) | 8% |
| 3-HHB(2F,3F)-O2 | (4-1-5-1) | 10% |
| 5-HHB(2F,3F)-O2 | (4-1-5-1) | 10% |
| 3-HBB(2F,3F)-O2 | (4-1-8-1) | 10% |
| 5-HBB(2F,3F)-O2 | (4-1-8-1) | 10% |
| 3-HH1OCro(7F,8F)-5 | (4-2-4-1) | 5% |

Into 100 parts by weight of the composition, 0.3 part by weight of compound (2-1-1) described below was added.

| | |
|---|---|
| MAC-BB-MAC | (2-1-1) |

NI = 94.8°C; Tc < -30°C; γ1 = 60.0 mPa·s; Δn = 0.106; Δε = -3.0; Vth = 2.61 V; VHR-1 = 98.9%; VHR-2 = 97.8%; VHR-2 = 97.3%; K33 = 13.5 pN; γ1/K33 = 4.44 GPa·s/N.

The composition of Comparative Example 1 has a larger ratio of rotational viscosity to an elastic constant in comparison with the composition of Example 1.

### Comparative Example 2

Example 15 was selected from compositions disclosed by WO 2010/084823 A. A basis therefor is that the composition contains compound (1-1-1), compound (1-5-1), compound (1-8-1), compound (2-8-1), compound (3-1-1), compound (3-9-1), compound (3-10-1), compound (4-1-2-1), compound (4-1-5-1) and compound (4-2-3-1). No description was made on rotational viscosity (γ1) and an elastic constant (K33), and therefore the composition was prepared and measured by the method described above. Components and characteristics of the composition are as described below.

| | | |
|---|---|---|
| V-HB(2F,3F)-O2 | (1-1-1) | 16% |
| 1V-HB(2F,3F)-O2 | (1-1-1) | 6% |
| V-HHB(2F,3F)-O2 | (1-5-1) | 10% |
| V2-HHB(2F,3F)-O2 | (1-5-1) | 7% |
| V-HBB(2F,3F)-O2 | (1-8-1) | 10% |
| V-HH-3 | (3-1-1) | 20% |
| 1V-HH-3 | (3-1-1) | 7% |
| 5-HHEBH-3 | (3-9-1) | 4% |
| 5-HB(F)HH-3 | (3-10-1) | 4% |
| 3-H2B(2F,3F)-O2 | (4-1-2-1) | 3% |
| 3-HHB(2F,3F)-O2 | (4-1-5-1) | 3% |
| 3-HH2Cro(7F,8F)-3 | (4-2-3-1) | 3% |
| 3-HH2Cro(7F,8F)-5 | (4-2-3-1) | 4% |
| 3-Cro(7F,8F)2HH-5 | (-) | 3% |

Into 100 parts by weight of the composition, 0.3 part by weight of compound (2-8-1) described below was added.

| | |
|---|---|
| MAC-B(2F)B(2F,3F)-MAC | (2-8-1) |

NI = 90.1°C; Tc < -20°C; γ1 = 72.1 mPa·s; Δn = 0.089; Δε = -3.6; Vth = 1.92 V; VHR-1 = 99.0%; VHR-2 = 98.1%; K33 = 16.5 pN; γ1/K33 = 4.37 GPa·s/N.

### Example 2

| | | |
|---|---|---|
| V-HHB(2F,3F)-O2 | (1-5-1) | 8% |
| 2-HH-3 | (3-1-1) | 19% |
| 3-HH-4 | (3-1-1) | 10% |
| 1-BB-3 | (3-3-1) | 10% |
| 3-HHB-1 | (3-5-1) | 3% |
| 3-HHB-3 | (3-5-1) | 3% |
| 5-B(F)BB-2 | (3-7-1) | 3% |
| 3-BB(2F,3F)-O2 | (4-1-3-1) | 9% |
| 5-BB(2F,3F)-O2 | (4-1-3-1) | 3% |
| 2O-BB(2F,3F)-O2 | (4-1-3-1) | 4% |
| 3-HH1OB(2F,3F)-O2 | (4-1-7-1) | 14% |
| 2-BB(2F,3F)B-3 | (4-1-11-1) | 14% |

Into 100 parts by weight of the composition, 0.5 part by weight of compound (2-2-1) described below was added.

| | |
|---|---|
| MAC-B(2F)B-MAC | (2-2-1) |

NI = 70.4°C; Tc < -20°C; γ1 = 43.1 mPa·s; Δn = 0.123; Δε = -2.5; Vth = 3.19 V; VHR-1 = 98.9%; VHR-2 = 98.0%; K33 = 13.2 pN; γ1/K33 = 3.27 GPa·s/N.

### Example 3

| | | |
|---|---|---|
| V-H2B(2F,3F)-O2 | (1-2-1) | 5% |
| V2-H2B(2F,3F)-O2 | (1-2-1) | 5% |
| V-HH2B(2F,3F)-O2 | (1-6-1) | 5% |
| V-HH-3 | (3-1-1) | 10% |
| 2-HH-3 | (3-1-1) | 5% |
| 3-HB-O2 | (3-2-1) | 5% |
| V2-HHB-1 | (3-5-1) | 10% |
| 1V2-HHB-1 | (3-5-1) | 8% |
| 5-HBB(F)B-2 | (3-13-1) | 3% |
| 3-HB(2F,3F)-O2 | (4-1-1-1) | 8% |
| 5-HB(2F,3F)-O2 | (4-1-1-1) | 8% |
| 3-H2B(2F,3F)-O2 | (4-1-2-1) | 7% |
| 5-H2B(2F,3F)-O2 | (4-1-2-1) | 7% |
| 3-HHB(2F,3F)-O2 | (4-1-5-1) | 5% |
| 5-HHB(2F,3F)-O2 | (4-1-5-1) | 5% |
| 3-HH2B(2F,3F)-O2 | (4-1-6-1) | 4% |

Into 100 parts by weight of the composition, 0.5 part by weight of compound (2-3-1) described below was added.

| | |
|---|---|
| MAC-B(F)B-MAC | (2-3-1) |

NI = 74.7°C; Tc < -20°C; γ1 = 45.0 mPa·s; Δn = 0.089; Δε = -2.4; Vth = 3.24 V; VHR-1 = 99.1%; VHR-2 = 98.3%; VHR-3 = 98.0%; K33 = 13.1 pN; γ1/K33 = 3.44 GPa·s/N.

### Example 4

| | | |
|---|---|---|
| V-HB(2F,3F)-O2 | (1-1-1) | 5% |
| V-BB(2F,3F)-O2 | (1-3-1) | 5% |
| V-BB(2F,3F)B-1 | (1-11-1) | 5% |
| V-HH-4 | (3-1-1) | 10% |
| 1V2-HH-3 | (3-1-1) | 8% |
| 3-HH-4 | (3-1-1) | 5% |
| 3-HH-O1 | (3-1) | 5% |
| 3-HHEH-5 | (3-4-1) | 4% |
| 3-HHEBH-5 | (3-9-1) | 3% |
| 3-BB(2F,3F)-O2 | (4-1-3-1) | 9% |
| 3-H1OB(2F,3F)-O2 | (4-1-4-1) | 9% |
| 3-HH1OB(2F,3F)-O2 | (4-1-7-1) | 9% |
| 2-BB(2F,3F)B-3 | (4-1-11-1) | 9% |
| 2-BB(2F,3F)B-4 | (4-1-11-1) | 9% |
| 3-1OCro(7F,8F)-5 | (4-2-2-1) | 5% |

Into 100 parts by weight of the composition, 0.4 part by weight of compound (2-18-1) described below was added.

| | |
|---|---|
| MAC-BB(F)B-MAC | (2-18-1) |

NI = 69.0°C; Tc < -20°C; γ1 = 56.0 mPa·s; Δn = 0.123; Δε = -3.1; Vth = 2.48 V; VHR-1 = 99.0%; VHR-2 = 98.2%; VHR-3 = 98.0%; K33 = 14.8 pN; γ1/K33 = 3.78 GPa·s/N.

### Example 5

| | | |
|---|---|---|
| V-HBB(2F,3F)-O2 | (1-8-1) | 4% |
| V-HHB(2F,3CL)-O2 | (1-9-1) | 4% |
| V-DhHB(2F,3F)-O2 | (1-12-1) | 4% |
| V-HDhB(2F,3F)-O2 | (1-13-1) | 4% |
| V-HH-3 | (3-1-1) | 20% |
| 1V-HH-3 | (3-1-1) | 5% |
| 1V-HH-4 | (3-1-1) | 5% |
| V2-BB-1 | (3-3-1) | 4% |
| 3-HHB-O1 | (3-5) | 5% |
| 3-HBB-2 | (3-6-1) | 5% |
| 3-HB(F)HH-5 | (3-10-1) | 4% |
| 3-HB(F)BH-5 | (3-12-1) | 4% |
| 3-HB(2F,3F)-O2 | (4-1-1-1) | 4% |
| 3-H2B(2F,3F)-O2 | (4-1-2-1) | 4% |
| 3-HH2B(2F,3F)-O2 | (4-1-6-1) | 4% |
| 3-HHB(2F,3CL)-O2 | (4-1-9-1) | 4% |
| 3-DhHB(2F,3F)-O2 | (4-1-12-1) | 4% |
| 3-HDhB(2F,3F)-O2 | (4-1-13-1) | 4% |
| 3-H2Cro(7F,8F)-5 | (4-2-1-1) | 4% |
| 3-HH2Cro(7F,8F)-5 | (4-2-3-1) | 4% |

Into 100 parts by weight of the composition, 0.3 part by weight of compound (2-23-1) described below was added.

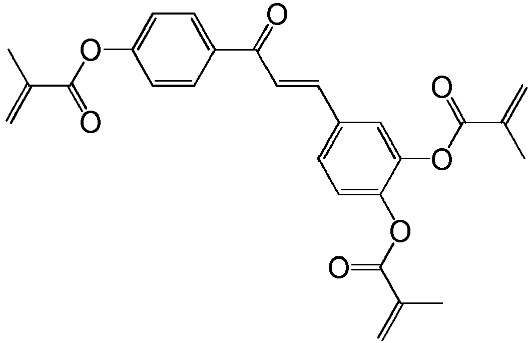

NI = 98.5°C; Tc < -30°C; γ1 = 61.9 mPa·s; Δn = 0.090; Δε = -2.4; Vth = 3.19 V; VHR-1 = 99.1%; VHR-2 = 98.3%; VHR-3 = 98.1%; K33 = 17.8 pN; γ1/K33 = 3.48 GPa·s/N.

### Example 6

| | | |
|---|---|---|
| V-HB(2F,3F)-O2 | (1-1-1) | 5% |
| V-H1OB(2F,3F)-O2 | (1-4-1) | 5% |
| V-HH1OB(2F,3F)-O2 | (1-7-1) | 5% |
| VFF-HH-3 | (3-1) | 12% |
| 7-HB-1 | (3-2-1) | 5% |
| V2-BB-1 | (3-3-1) | 5% |
| 3-HHB-1 | (3-5-1) | 5% |
| V2-HHB-1 | (3-5-1) | 5% |
| 1-BB(F)B-2V | (3-8-1) | 5% |
| 5-HBBH-3 | (3-11-1) | 3% |
| 3-HB(2F,3F)-O2 | (4-1-1-1) | 10% |
| 3-H2B(2F,3F)-O2 | (4-1-2-1) | 10% |
| 3-HH2B(2F,3F)-O2 | (4-1-6-1) | 10% |
| 3-HHB(2F,3CL)-O2 | (4-1-9-1) | 6% |
| 3-HBB(2F,3CL)-O2 | (4-1-10-1) | 6% |
| 3-HH2B(2F,3F,6Me)-O2 | (4-1-16-1) | 3% |

Into 100 parts by weight of the composition, 0.6 part by weight of compound (2-1-1) described below was added.

| | |
|---|---|
| MAC-VO-BB-MAC | (2-1-1) |

NI = 77.4°C; Tc < -20°C; γ1 = 55.2 mPa·s; Δn = 0.104; Δε = -2.4; Vth = 3.27 V; VHR-1 = 99.2%; VHR-2 = 98.3%; VHR-3 = 98.1%; K33 = 14.2 pN; γ1/K33 = 3.89 GPa·s/N.

### Example 7

| | | |
|---|---|---|
| V-HHB(2F,3F)-O2 | (1-5-1) | 5% |
| V-HHB(2F,3CL)-O2 | (1-9-1) | 4% |
| V-HBB(2F,3CL)-O2 | (1-10-1) | 4% |
| V-HH-3 | (3-1-1) | 24% |
| 1V-HH-3 | (3-1-1) | 8% |
| 1V2-HHB-1 | (3-5-1) | 6% |
| V-HHB-1 | (3-5-1) | 6% |
| 3-HB(2F,3F)-O2 | (4-1-1-1) | 10% |
| 3-HHB(2F,3F)-O2 | (4-1-5-1) | 10% |
| 3-dhHB(2F,3F)-O2 | (4-1-14-1) | 7% |
| 3-dhBB(2F,3F)-O2 | (4-1-15-1) | 7% |
| 3-HH1OB(2F,3F,6Me)-O2 | (4-1-17-1) | 3% |
| 3-HB1OCro(7F,8F)-5 | (4-2-5-1) | 3% |
| 1O1-HBBH-4 | (-) | 3% |

Into 100 parts by weight of the composition, 0.7 part by weight of compound (2-1-1) described below was added.

NI = 101.1°C; Tc < -30°C; γ1 = 61.6 mPa·s; Δn = 0.095; Δε = -2.3; Vth = 3.18 V; VHR-1 = 99.0%; VHR-2 = 98.1%; VHR-3 = 97.9%; K33 = 16.5 pN; γ1/K33 = 3.73 GPa·s/N.

### Example 8

| | | |
|---|---|---|
| 1V2-HHB(2F,3F)-O2 | (1-5-1) | 4% |
| 1V2-dhHB(2F,3F)-O2 | (1-14-1) | 4% |
| 1V2-dhBB(2F,3F)-O2 | (1-15-1) | 4% |
| V-HH-3 | (3-1-1) | 15% |
| 2-HH-3 | (3-1-1) | 10% |
| V-HHB-1 | (3-5-1) | 8% |
| V2-HHB-1 | (3-5-1) | 5% |
| 2-BB(F)B-3 | (3-8-1) | 5% |
| 5-HB(2F,3F)-1 | (4-1-1-1) | 10% |
| 2O-BB(2F,3F)-O2 | (4-1-3-1) | 8% |
| 3-H1OB(2F,3F)-O2 | (4-1-4-1) | 7% |
| 3-HH1OB(2F,3F)-O2 | (4-1-7-1) | 7% |
| 3-HBB(2F,3F)-1 | (4-1-8-1) | 10% |
| 4O-B(2F,3F)B(2F,3F)-O6 | (4-1) | 3% |

Into 100 parts by weight of the composition, 0.5 part by weight of compound (2-2-1) described below was added.

| | |
|---|---|
| MAC-B(2F)B-OV-MAC | (2-2-1) |

NI = 76.3°C; Tc < -20°C; γ1 = 48.6 mPa·s; Δn = 0.100; Δε = -2.4; Vth = 3.22 V; VHR-1 = 99.1%; VHR-2 = 98.3%; VHR-3 = 98.1%; K33 = 15.8 pN; γ1/K33 = 3.08 GPa·s/N.

### Example 9

| | | |
|---|---|---|
| V-HHB(2F,3F)-O2 | (1-5-1) | 11% |
| V-HH-3 | (3-1-1) | 29% |
| V-HH-5 | (3-1-1) | 5% |
| 1-BB-3 | (3-3-1) | 9% |
| 3-BB(2F,3F)-O2 | (4-1-3-1) | 6% |
| 2O-BB(2F,3F)-O2 | (4-1-3-1) | 4% |
| 2-HH1OB(2F,3F)-O2 | (4-1-7-1) | 10% |
| 3-HH1OB(2F,3F)-O2 | (4-1-7-1) | 13% |
| 2-BB(2F,3F)B-3 | (4-1-11-1) | 13% |

Into 100 parts by weight of the composition, 0.1 part by weight of compound (2-1-1) described below and 0.1 part by weight of compound (2-2-1) described below were added.

| | |
|---|---|
| MAC-VO-BB-MAC | (2-1-1) |
| MAC-B(2F)B-MAC | (2-2-1) |

NI = 74.4°C; Tc < -20°C; γ1 = 45.2 mPa·s; Δn = 0.113; Δε = -2.9; Vth = 2.64V; VHR-1 = 99.0%; VHR-2 = 98.2%; VHR-3 = 98.0%; K33 = 13.2 pN; γ1/K33 = 3.42 GPa·s/N.

The compositions in Example 1 to Example 9 have a smaller ratio of rotational viscosity to an elastic constant in comparison with the compositions in Comparative Example 1 and Comparative Example 2. Thus, the liquid crystal composition according to the invention has further excellent characteristics.

### Industrial Applicability

The invention concerns a liquid crystal composition satisfying at least one of characteristics such as a high maximum temperature of a nematic phase, a low minimum temperature of the nematic phase, a small viscosity, a large optical anisotropy, a large dielectric anisotropy, a large specific resistance, a high stability to ultraviolet light and a high stability to heat, or a liquid crystal composition having a suitable balance regarding at least two of the characteristics. A liquid crystal display device including such a composition is applied to constitute an AM device having a short response time, a large voltage holding ratio, a large contrast ratio, a long service life and so forth, and thus can be used for a liquid crystal projector, a liquid crystal television and so forth.

## Claims

1. A liquid crystal composition that has a negative dielectric anisotropy, and 4.2 GPa · s/N or less as a ratio of rotational viscosity (γ1) to an elastic constant (K33), and contains at least one compound selected from the group of compounds represented by formula (1) as a first component, and at least one compound selected from the group of compounds represented by formula (2) as a second component: 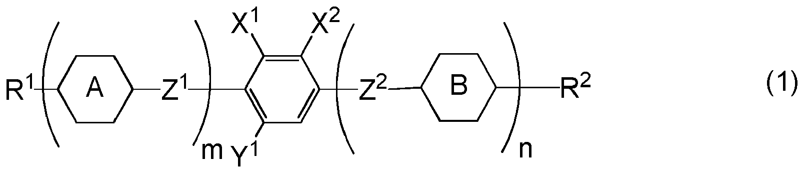 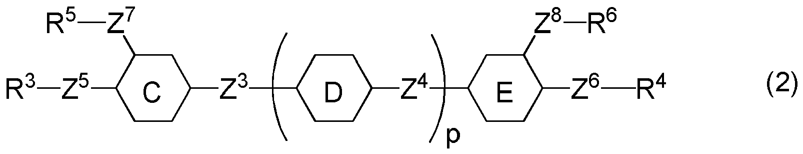 wherein, R¹ is alkenyl having 2 to 12 carbons; R² is alkyl having 1 to 12 carbons, alkoxy having 1 to 12 carbons or alkenyl having 2 to 12 carbons; R³, R⁴, R⁵ and R⁶ are independently hydrogen, alkyl having 1 to 12 carbons, alkoxy having 1 to 12 carbons, alkenyl having 2 to 12 carbons, or alkenyl having 2 to 12 carbons in which at least one of hydrogen is replaced by fluorine, or acryloyl, methacryloyl, vinyloxy, propenyloxy, oxirane, oxetane or vinylcarbonyl, and at least one of R³, R⁴, R⁵ and R⁶ is acryloyl, methacryloyl, vinyloxy, propenyloxy, oxirane, oxetane or vinylcarbonyl; Z¹, Z² and Z⁴ are independently a single bond, ethylene, methyleneoxy or carbonyloxy; Z³ is a single bond, ethylene, methyleneoxy, carbonyloxy, -CO-CR⁷=CR⁸-, -CR⁷=CR⁸-CO-, -CR⁷=CR⁸-, -C (=CR⁷R⁸) - or -C(=R⁹)-; R⁷ and R⁸ are independently hydrogen, halogen, alkyl having 1 to 10 carbons, or alkyl having 1 to 10 carbons in which at least one of hydrogen is replaced by fluorine; R⁹ is a group selected from the group of groups represented by formula (R-1); 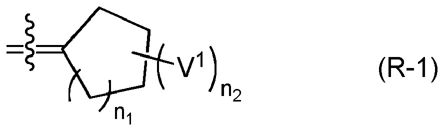 wherein, in formula (R-1), V¹ is independently halogen, alkyl having 1 to 6 carbons, or alkyl having 1 to 6 carbons in which at least one of hydrogen is replaced by fluorine; n₁ is an integer from 1 to 8; n₂ is an integer from 0 to 4;
Z⁵, Z⁶, Z⁷ and Z⁸ are independently a single bond or alkylene having 1 to 12 carbons, and at least one of hydrogen of the alkylene may be replaced by halogen or -C≡N, and at least one of -CH₂- may be replaced by -O-, -S-, -NH-, -CO-, -CO-O-, -O-CO-, -O-CO-O-, -CH=CH- or -C≡C-; ring A and ring B are independently 1,4-cyclohexylene, 1,4-phenylene in which at least one of hydrogen may be replaced by fluorine or chlorine, or tetrahydropyran-2,5-diyl; ring C and ring E are independently 1,4-cyclohexylene, 1,4-phenylene or 2,6-naphthalene, and ring C and ring E when R⁵ and R⁶ is hydrogen and Z⁷ and Z⁸ are a single bond may be 2-fluoro-1,4-phenylene, 3-fluoro-1,4-phenylene, 2,3-difluoro-1,4-phenylene, 2-methyl-1,4-phenylene, 3-methyl-1,4-phenylene, 2-trifluoromethyl-1,4-phenylene or 3-trifluoromethyl-1,4-phenylene; ring D is 1,4-cyclohexylene, 1,4-phenylene, 2,6-naphthalene, 2-fluoro-1,4-phenylene, 3-fluoro-1,4-phenylene, 2,3-difluoro-1,4-phenylene, 3,6-difluoro-1,4-phenylene, 2-methyl-1,4-phenylene, 3-methyl-1,4-phenylene, 2-trifluoromethyl-1,4-phenylene or 3-trifluoromethyl-1,4-phenylene; X¹ and X² are independently fluorine or chlorine; Y¹ is hydrogen or methyl; m is 1, 2 or 3, n is 0 or 1, and a sum of m and n is 1, 2 or 3; and p is 0, 1 or 2.

2. The liquid crystal composition according to claim 1, containing at least one compound selected from the group of compounds represented by formula (1-1) to formula (1-15) as the first component: 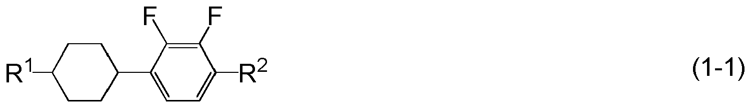 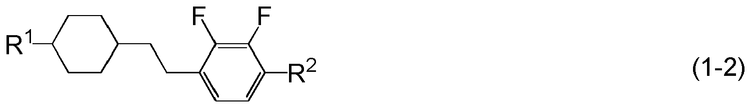 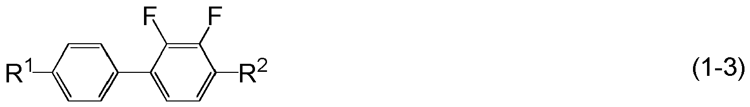 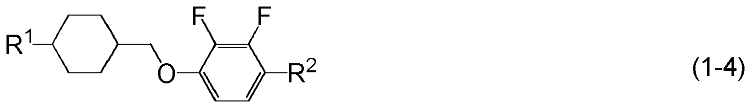 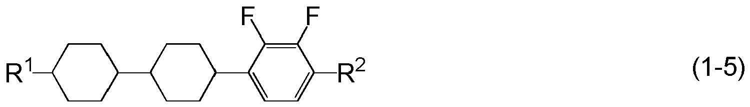 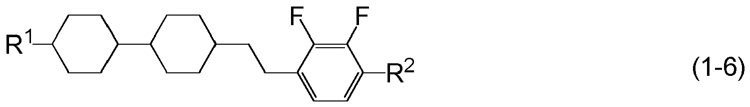 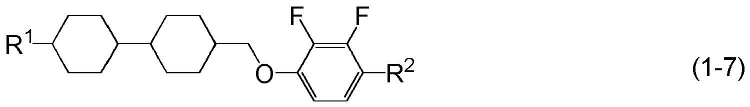 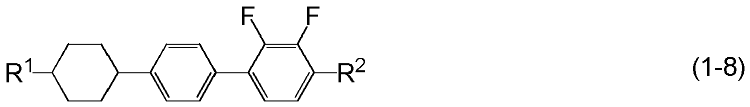 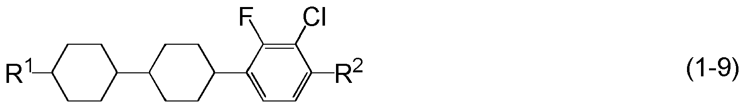 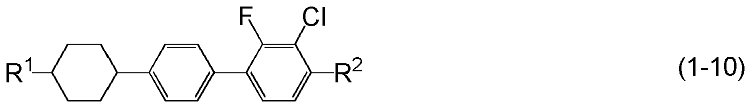 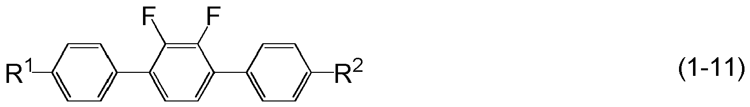 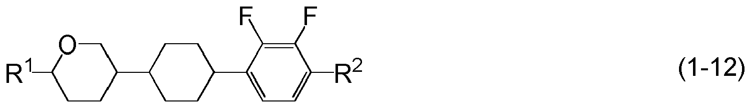 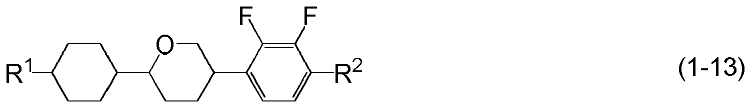 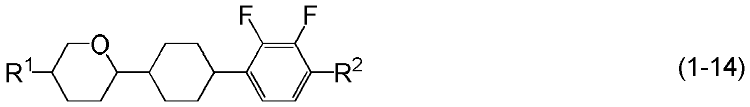 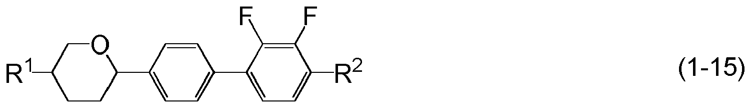 wherein, R¹ is alkenyl having 2 to 12 carbons; R² is alkyl having 1 to 12 carbons, alkoxy having 1 to 12 carbons or alkenyl having 2 to 12 carbons.

3. The liquid crystal composition according to claim 1 or 2, containing at least one compound selected from the group of compounds represented by formula (1-1) according to claim 2 as the first component.

4. The liquid crystal composition according to any one of claims 1 to 3, containing at least one compound selected from the group of compounds represented by formula (1-5) according to claim 2 as the first component.

5. The liquid crystal composition according to any one of claims 1 to 4, containing at least one compound selected from the group of compounds represented by formula (1-8) according to claim 2 as the first component.

6. The liquid crystal composition according to any one of claims 1 to 5, containing at least one compound selected from the group of compounds represented by formula (2-1) to formula (2-26) as the second component: 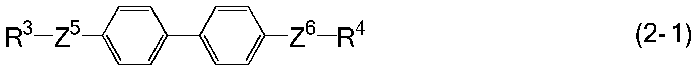 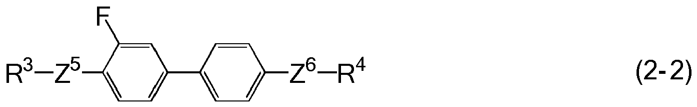 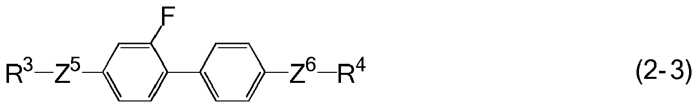 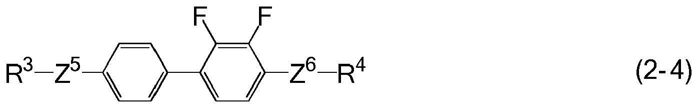 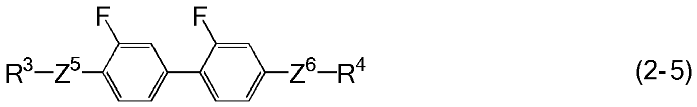 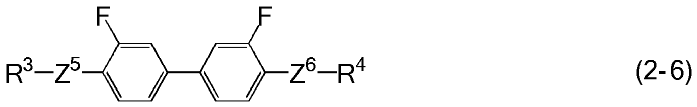 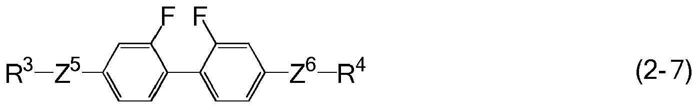 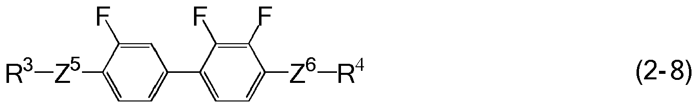 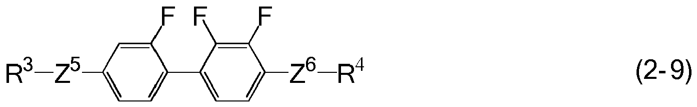 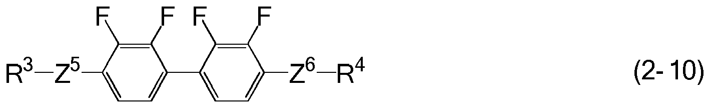 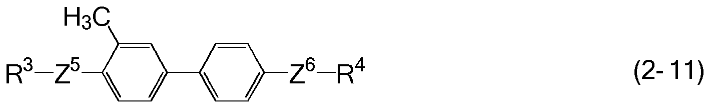 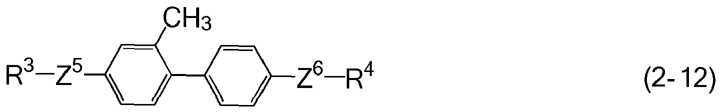 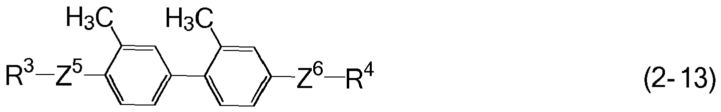 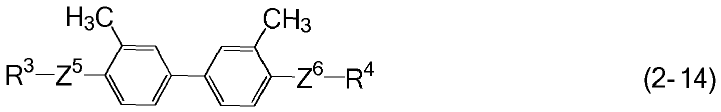 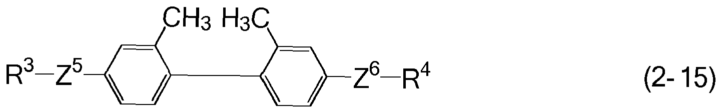 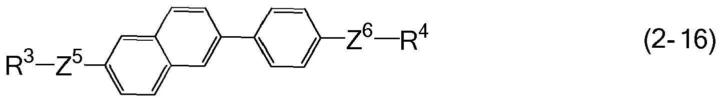 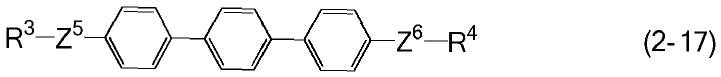 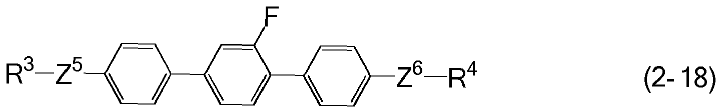 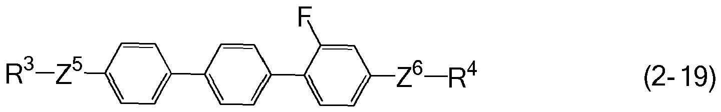 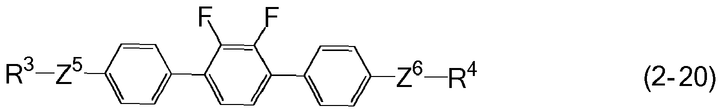 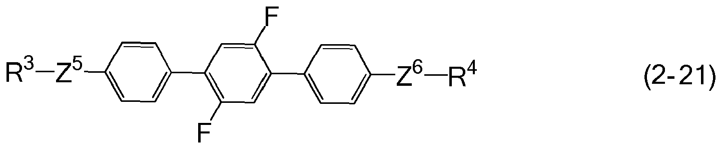 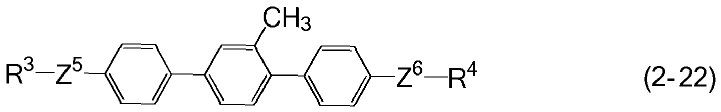 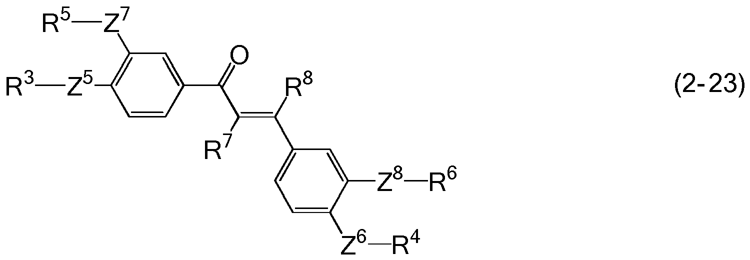 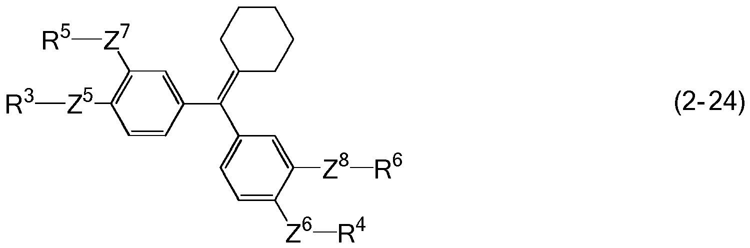 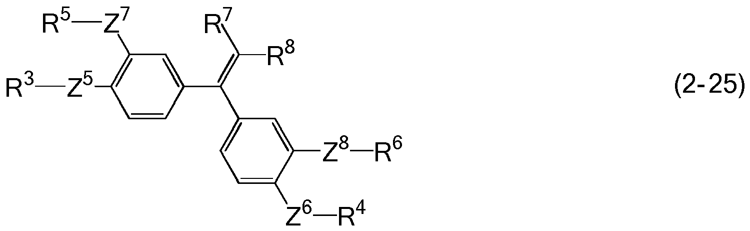 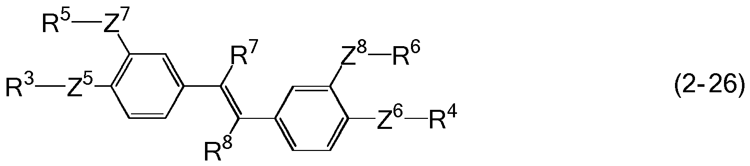 wherein, R³, R⁴, R⁵ and R⁶ are independently hydrogen, alkyl having 1 to 12 carbons, alkoxy having 1 to 12 carbons, alkenyl having 2 to 12 carbons, or alkenyl having 2 to 12 carbons in which at least one of hydrogen is replaced by fluorine, or acryloyloxy, methacryloyloxy, vinyloxy, propenyloxy, oxirane, oxetane or vinylcarbonyl, and at least one of R³, R⁴, R⁵ and R⁶ is acryloyloxy, methacryloyloxy, vinyloxy, propenyloxy, oxirane, oxetane or vinylcarbonyl; R⁷ and R⁸ are independently hydrogen, halogen, alkyl having 1 to 10 carbons, or alkyl having 1 to 10 carbons in which at least one of hydrogen is replaced by fluorine; Z⁵, Z⁶, Z⁷ and Z⁸ are independently a single bond or alkylene having 1 to 12 carbons, at least one of hydrogen of the alkylene may be replaced by halogen or -C=N, and at least one of non-adjacent -CH₂- may be replaced by -O-, -S-, -NH-, -CO-, -CO-O-, -O-CO-, -O-CO-O-, -CH=CH- or -C≡C-.

7. The liquid crystal composition according to any one of claims 1 to 6, containing at least one compound selected from the group of compounds represented by formula (2-2) according to claim 6 as the second component.

8. The liquid crystal composition according to any one of claims 1 to 7, containing at least one compound selected from the group of compounds represented by formula (2-1) according to claim 6 as the second component.

9. The liquid crystal composition according to any one of claims 1 to 8, containing at least one compound selected from the group of compounds represented by formula (2-3) according to claim 6 as the second component.

10. The liquid crystal composition according to any one of claims 1 to 9, containing at least one compound selected from the group of compounds represented by formula (2-18) according to claim 6 as the second component.

11. The liquid crystal composition according to any one of claims 1 to 10, wherein the second component contains at least one compound selected from the group of compounds represented by formula (2-23) according to claim 6.

12. The liquid crystal composition according to any one of claims 1 to 11, wherein a ratio of the first component is in the range of 1% by weight to 19% by weight based on the weight of a liquid crystal composition excluding the second component, and a ratio of the second component is in the range of 0.05 part by weight to 10 parts by weight based on 100 parts by weight of the liquid crystal composition excluding the second component.

13. The liquid crystal composition according to any one of claims 1 to 12, further containing at least one compound selected from the group of compounds represented by formula (3) as a third component: 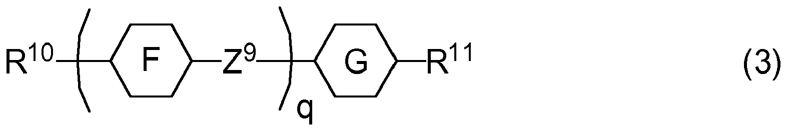 wherein, R¹⁰ and R¹¹ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine; ring F and ring G are independently 1,4-cyclohexylene, 1,4-phenylene, 2-fluoro-1,4-phenylene, 3-fluoro-1,4-phenylene or 2,5-difluoro-1,4-phenylene; Z⁹ is independently a single bond, ethylene, methyleneoxy or carbonyloxy; and q is 1, 2 or 3.

14. The liquid crystal composition according to claim 13, containing at least one compound selected from the group of compounds represented by formula (3-1) to formula (3-13) as the third component: 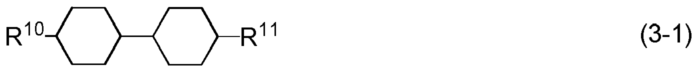 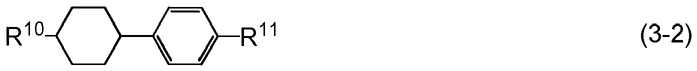 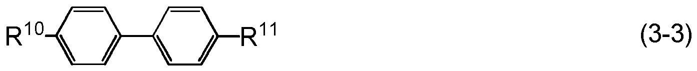 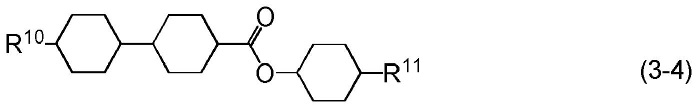 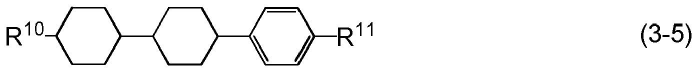 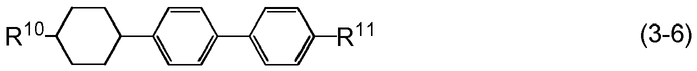 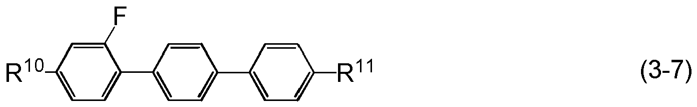 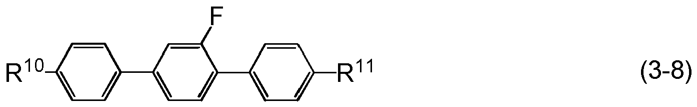 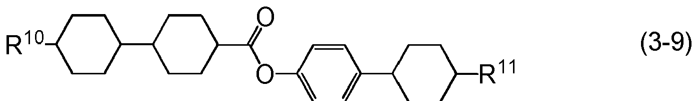 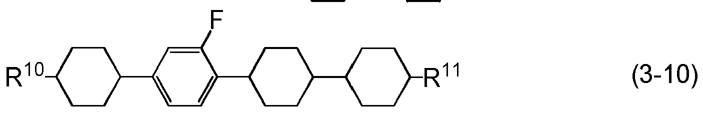 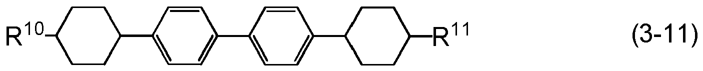 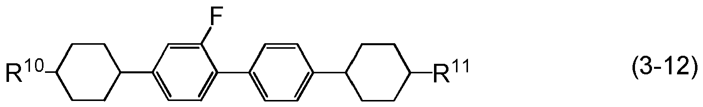 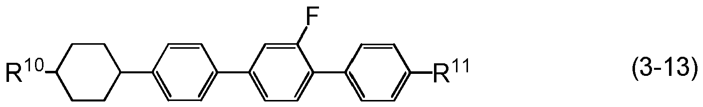 wherein, R¹⁰ and R¹¹ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

15. The liquid crystal composition according to claim 13 or 14, containing at least one compound selected from the group of compounds represented by formula (3-1) according to claim 14 as the third component.

16. The liquid crystal composition according to any one of claims 13 to 15, containing at least one compound selected from the group of compounds represented by formula (3-1) according to claim 14, and at least one compound selected from the group of compounds represented by formula (3-5) according to claim 14 as the third component.

17. The liquid crystal composition according to any one of claims 13 to 16, containing at least one compound selected from the group of compounds represented by formula (3-1) according to claim 14, and at least one compound selected from the group of compounds represented by formula (3-8) according to claim 14 as the third component.

18. The liquid crystal composition according to any one of claims 13 to 17, wherein a ratio of the third component is in the range of 15% by weight to 75% by weight based on the weight of the liquid crystal composition excluding the second component.

19. The liquid crystal composition according to any one of claims 1 to 18, further containing at least one compound selected from the group of compounds represented by formula (4-1) or formula (4-2) as a fourth component: 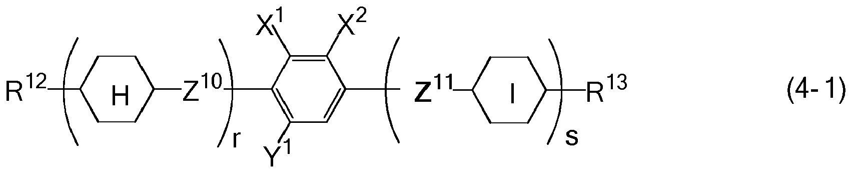 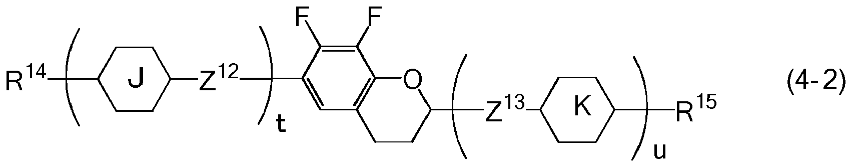 wherein, R¹² and R¹³ are independently alkyl having 1 to 12 carbons or alkoxy having 1 to 12 carbons; R¹⁴ and R¹⁵ are independently alkyl having 1 to 12 carbons, alkoxy having 1 to 12 carbons or alkenyl having 2 to 12 carbons; ring H, ring I, ring J and ring K are independently 1,4-cyclohexylene, 1,4-phenylene in which at least one of hydrogen may be replaced by fluorine or chlorine, or tetrahydropyran-2, 5-diyl; Z¹⁰, Z¹¹, Z¹² and Z¹³ are independently a single bond, ethylene, methyleneoxy or carbonyloxy; X¹ and X² are independently fluorine or chlorine; Y¹ is hydrogen or methyl; r is 1, 2 or 3, s is 0 or 1, and a sum of r and s is 1, 2 or 3; and t is 0, 1 or 2, u is 0 or 1, and a sum of t and u is 1 or 2.

20. The liquid crystal composition according to claim 19, containing at least one compound selected from the group of compounds represented by formula (4-1-1) to formula (4-1-17) and formula (4-2-1) to formula (4-2-5) as the fourth component: 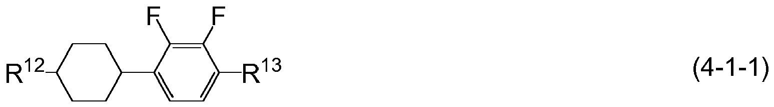 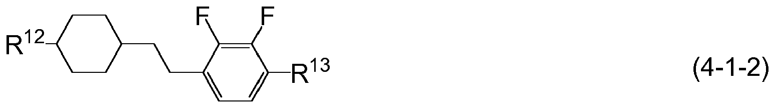 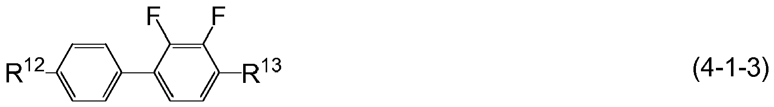 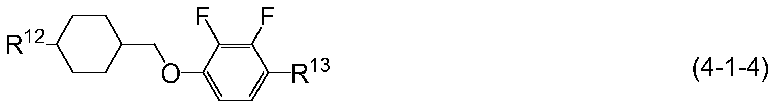 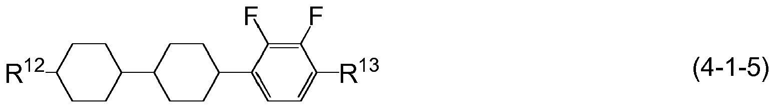 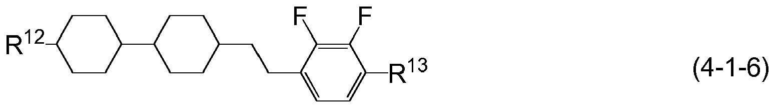 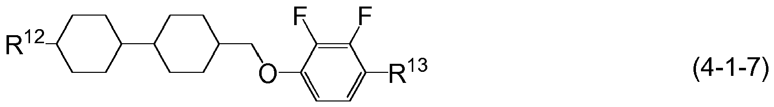 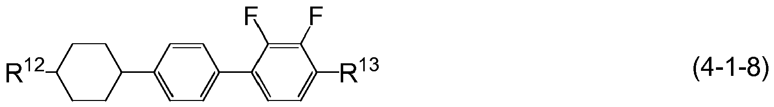 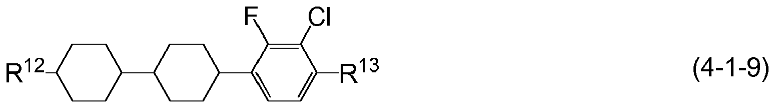 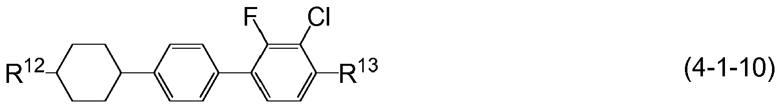 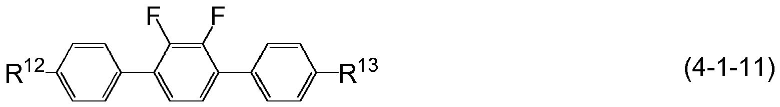 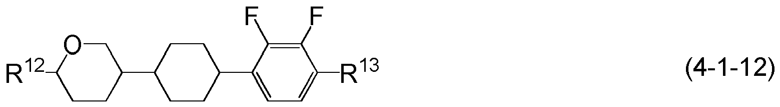 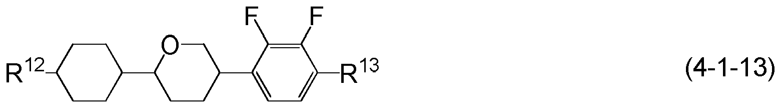 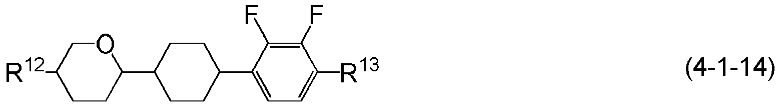 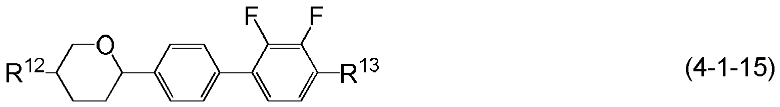 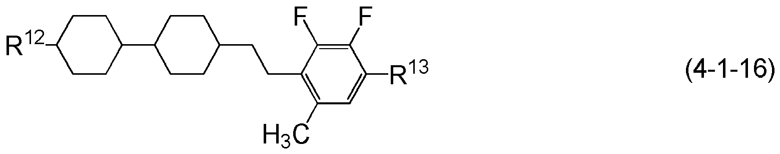 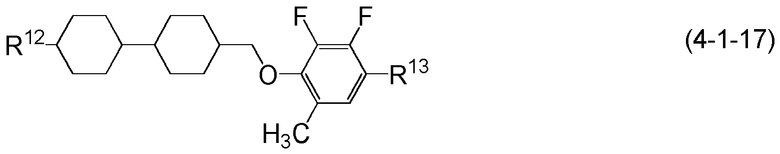 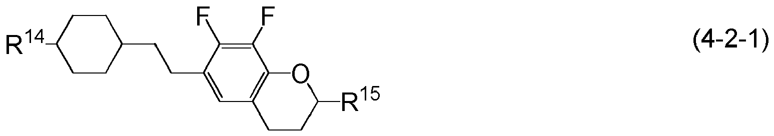 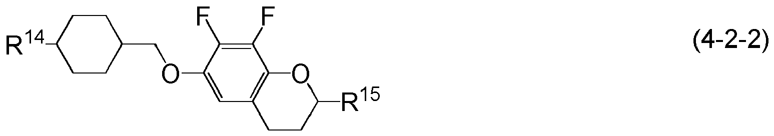 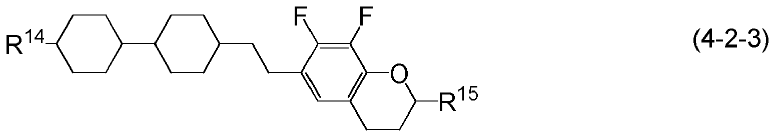 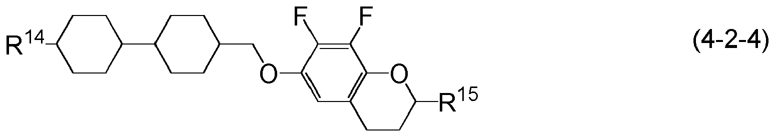 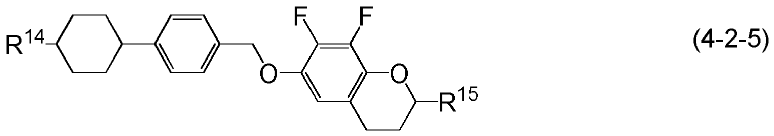 wherein, R¹² and R¹³ are independently alkyl having 1 to 12 carbons or alkoxy having 1 to 12 carbons; R¹⁴ and R¹⁵ are independently alkyl having 1 to 12 carbons, alkoxy having 1 to 12 carbons or alkenyl having 2 to 12 carbons.

21. The liquid crystal composition according to claim 19 or 20, containing at least one compound selected from the group of compounds represented by formula (4-1-1) according to claim 20 as the fourth component.

22. The liquid crystal composition according to any one of claims 19 to 21, containing at least one compound selected from the group of compounds represented by formula (4-1-1) according to claim 20, and at least one compound selected from the group of compounds represented by formula (4-1-5) according to claim 20 as the fourth component.

23. The liquid crystal composition according to any one of claims 19 to 22, containing at least one compound selected from the group of compounds represented by formula (4-1-1) according to claim 20, and at least one compound selected from the group of compounds represented by formula (4-1-8) according to claim 20 as the fourth component.

24. The liquid crystal composition according to any one of claims 19 to 23, containing at least one compound selected from the group of compounds represented by formula (4-1-3) according to claim 20, and at least one compound selected from the group of compounds represented by formula (4-1-7) according to claim 20 as the fourth component.

25. The liquid crystal composition according to any one of claims 19 to 24, containing at least one compound selected from the group of compounds represented by formula (4-2-4) according to claim 20 as the fourth component.

26. The liquid crystal composition according to any one of claims 19 to 25, wherein a ratio of the fourth component is in the range of 10% by weight to 70% by weight based on the weight of the liquid crystal composition excluding the second component.

27. The liquid crystal composition according to any one of claims 1 to 26, wherein a maximum temperature of a nematic phase is 70°C or higher, an optical anisotropy (25°C) at a wavelength of 589 nanometers is 0.08 or more, and a dielectric anisotropy (25°C) at a frequency of 1 kHz is -2 or less.

28. A polymer sustained alignment mode (PSA) liquid crystal display device, comprising two substrates having an electrode layer on at least one of the substrates, and arranging, between the two substrates, a liquid crystal material containing a compound formed by polymerization of a polymerizable compound in the liquid crystal composition according to any one of claims 1 to 27.

29. The liquid crystal display device according to claim 28, wherein an operating mode in the liquid crystal display device is a TN mode, a VA mode, an IPS mode or a PSA mode, and a driving mode in the liquid crystal display device is an active matrix mode.

30. A method for manufacturing a liquid crystal display device, wherein the liquid crystal display device according to claim 28 is manufactured by polymerization of the polymerizable compound by irradiating the liquid crystal composition according to any one of claims 1 to 27 arranged between the two substrates with light in a voltage application state.

31. Use of the liquid crystal composition according to any one of claims 1 to 27 in a liquid crystal display device.
